(19) Europäisches Patentamt
European Patent Office
Office européen des brevets

(11) EP 1 894 198 B1

(12) **EUROPÄISCHE PATENTSCHRIFT**

(45) Veröffentlichungstag und Bekanntmachung des Hinweises auf die Patenterteilung:
**15.10.2008 Patentblatt 2008/42**

(21) Anmeldenummer: **06743145.2**

(22) Anmeldetag: **09.06.2006**

(51) Int Cl.:
***G11B 27/10*** *(2006.01)* ***G03B 31/04*** *(2006.01)*

(86) Internationale Anmeldenummer:
**PCT/EP2006/005554**

(87) Internationale Veröffentlichungsnummer:
**WO 2006/136301 (28.12.2006 Gazette 2006/52)**

(54) **VORRICHTUNG UND VERFAHREN ZUM DURCHFÜHREN EINER KORRELATION ZWISCHEN EINEM TESTTONSIGNAL, DAS MIT VARIABLER GESCHWINDIGKEIT ABSPIELBAR IST, UND EINEM REFERENZTONSIGNAL**

DEVICE AND METHOD FOR ESTABLISHING A CORRELATION BETWEEN A TEST AUDIO SIGNAL PLAYABLE AT A VARIABLE SPEED AND A REFERENCE AUDIO SIGNAL

DISPOSITIF ET PROCEDE POUR REALISER UNE CORRELATION ENTRE UN SIGNAL DE SON D'ESSAI QUI PEUT ETRE PRODUIT AVEC UNE VITESSE VARIABLE, ET UN SIGNAL DE SON DE REFERENCE

(84) Benannte Vertragsstaaten:
**DE FR GB**

(30) Priorität: **22.06.2005 DE 102005028978**
**23.09.2005 DE 102005045627**

(43) Veröffentlichungstag der Anmeldung:
**05.03.2008 Patentblatt 2008/10**

(73) Patentinhaber: **Fraunhofer-Gesellschaft zur Förderung der angewandten Forschung e.V.**
**80686 München (DE)**

(72) Erfinder:
- **SPORER, Thomas**
  **90766 Fürth (DE)**
- **BECKINGER, Michael**
  **99084 Erfurt (DE)**

(74) Vertreter: **Zinkler, Franz et al**
**Schoppe, Zimmermann, Stöckeler & Zinkler**
**Patentanwälte**
**Postfach 246**
**82043 Pullach bei München (DE)**

(56) Entgegenhaltungen:
**US-A- 5 040 081** **US-A- 5 087 980**

- **PATENT ABSTRACTS OF JAPAN Bd. 014, Nr. 183 (P-1035), 12. April 1990 (1990-04-12) & JP 02 029963 A (MITSUBISHI ELECTRIC CORP), 31. Januar 1990 (1990-01-31)**
- **F. JORDAN: "Generating time code information from analog sources" 28. Mai 2005 (2005-05-28), AUDIO ENGINEERING SOCIETY , BARCELONA , XP009070534 in der Anmeldung erwähnt Zusammenfassung**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung bezieht sich auf eine Vorrichtung und ein Verfahren zum Durchführen einer Korrelation zwischen einem Testtonsignal, das mit variabler Geschwindigkeit abspielbar ist, und einem Referenztonsignal, um beispielsweise Filmereignisse mit einer Bildwiedergabe zu synchronisieren.

Audio-Video-Daten sind auf Datenträgern, z.B. Film oder Band, oder Übertragungskanälen, z.B. Rundfunk oder Telefon, in einem festen Format gespeichert, welches eine Erweiterung um neuartige Audioformate oder andere synchrone bzw. bildsynchrone Zusatzdienste, wie z.B. Untertitel, nicht zulässt. Bei der Einführung beispielsweise neuer Audioformate müssen daher neue Datenträger bzw. Filmkopien produziert werden, die die neuen Audioformate aufweisen.

Fig. 8 zeigt einen beispielhaften Film 110. Auf dem Film sind in räumlicher Folge, bzw. während des Abspielens entsprechend in zeitlicher Folge, Filminformationen aufgebracht, z.B. Videoinformation bzw. Bilder 112, die im Englischen auch als "Frames" bzw. "Video-Frames" bezeichnet werden, und Audio-Informationen bzw. eine oder eine Mehrzahl von analogen oder digitalen Tonspuren 114, die im digitalen Fall "Audio-Frames" aufweisen. Des weiteren weist der Film 110 beispielhaft Vorschubperforationen 116 auf, mit deren Hilfe der Film abgespielt wird.

Zur Synchronisation von Zusätzen sind prinzipiell zwei Methoden bekannt.

Die erste Methode beinhaltet das Speichern eines Timecodes auf dem Datenträger, wie z.B. bei DTS (DTS = Digital Theatre System) für Kinoton, bzw. in einem Zusatzkanal, der mit dem Audiosignal verbunden ist. Beispiele hierfür sind anxilliary data by DAB und mp3. Der Timecode wird dann verwendet, um Ton- bzw. Zusatzinformationen synchron von einem externen Datenträger, bei DTS z.B. CD, abzuspielen. Nachteilig an dieser Methode ist jedoch, dass jedes zusätzliche Format weiteren Platz auf dem Datenträger bzw. Übertragungskanal benötigt, der unter Umständen aber nicht mehr verfügbar ist. Beim Film sind dies z.B. die Spuren für Analog-Ton, Dolby-Digital, DTS, SDDS (SDDS = Sony Dynamic Digital Sound). Proprietäre Formate verhindern jedoch die Nutzung des Timecodes einer Erweiterung durch andere Erweiterungen. Gegenseitige Störungen der Erweiterungen sind nicht immer zu verhindern, ein Beispiel hierfür ist die Nutzung von anxilliary data in mp3 für Zusatzinformationen und Bandbreitenerweiterung verschiedener Hersteller.

Die zweite Methode basiert auf der missbräuchlichen Benutzung von Analog-Ton-Spuren zur Speicherung von Timecode, wie sie z.B. in einem Prototypenkino, das mit einem IOSONO-System ausgestattet ist, verwendet wird. Nachteilig an dieser Methode ist jedoch, dass die Analogspur in allen Systemen vorhanden ist und oft als Fallback-Lösung bei Störungen der anderen Systeme verwendet wird, das heißt, eine Zweckentfremdung der Analogspur verhindert die Fallback-Möglichkeit. Die automatische Umschaltung auf die Analogspur, die in die meisten Kinos eingebaut ist, führt dazu, dass der Timecode als Analogsignal abgespielt wird, wenn auf den "moderneren" Spuren für Dolby-Digital bzw. DTS kein Signal vorhanden ist. In dem Prototypenkino muss daher bei einer reinen Wellenfeldsynthese-Wiedergabe, die im folgenden noch erläutert wird, die redundante Analogwiedergabe manuell abgeschaltet werden, weil sonst der Timecode über die redundanten weiteren Lautsprecher zu hören ist.

Die akustische Wellenfeldsynthese, kurz WFS, geht über die Surround-Ansätze der Formate Dolby, SDDS oder DTS hinaus. Bei der WFS wird versucht, die Luftschwingungen einer realen Situation, die den Schall ausmachen, über einen ganzen Raum nachzubilden. Im Gegensatz zur herkömmlichen Wiedergabe über zwei oder mehr Lautsprecher, bei der die Abbildung der Position der originären Schallquellen sich auf eine Linie zwischen den Lautsprechern beschränkt, soll die Wellenfeldsynthese das gesamte Schallfeld originalgetreu auf den Raum übertragen. Das bedeutet, dass die virtuellen Schallquellen exakt räumlich lokalisierbar sind, und gegebenenfalls sogar mitten im beschallten Raum zu existieren scheinen, somit umgehbar werden. Systeme mit bis zu 200 Lautsprechern in Kinosystemen und bis zu 900 Lautsprechern in Theaterbeschallungssystemen sind derzeit schon realisiert worden.

Die Wellenfeldsynthese basiert auf dem Huygensschen Prinzip, das besagt, dass jeder Punkt auf einer Wellenfront als Ausgangspunkt für eine elementare sphärische Welle angesehen werden kann. Durch Interferenz aller Elementarwellen entsteht eine neue Wellenfront, die mit der ursprünglichen Welle identisch ist.

Ein derartiges Klangsystem ist vom Fraunhofer-Institut für Digitale Medientechnologie unter dem Namen IOSONO entwickelt worden und im Kino Ilmenau im Einsatz.

Als Beispiel aus der Praxis sei daher das Kino Ilmenau genannt, bei dem die Wellenfeldsynthese in zwei Modi betrieben wird.

Im ersten Modus wird das Kino als "echtes" Wellenfeldsynthese-System betrieben, wobei hier auf der Analogspur des 35 mm Films der Timecode gespeichert ist, wie dies bezüglich der zweiten "missbräuchlichen" Methode zuvor erläutert wurde, und der WFS-Ton von einem externen Medium, z.B. Festplatte oder DVD, zugespielt wird.

In dem zweiten Modus, der "kompatiblen Wiedergabe", wird der auf jedem 35 mm Film gespeicherte Ton von einem Dolby-Prozessor, alternativ könnte auch DTS bzw. SDDS eingesetzt werden, ausgelesen und decodiert, wobei der Dolby-Prozessor ggf. auch automatisch auf die Analogspur umschaltet, und das entstehende Multikanalsignal via WFS auf virtuelle Lautsprecher abbildet.

Da für beide Modi unterschiedliche Signalpfade notwendig sind, ist eine Teilung des Signals, das vom Lesekopf für das Analogsignal kommt, notwendig, was zusätzlichen technischen Aufwand zur Folge hat.

Zusammenfassend kann daher gesagt werden, dass auf den heutigen Kinofilmrollen kein Platz mehr ist, um eine weitere Synchronisationsspur für beispielsweise externe Tonsysteme oder Untertitelsysteme anzubringen. Alle bisher erhältlichen Kinotonsysteme, analog und digital, erhalten ihre Tonspur entweder direkt über eine oder eine Mehrzahl von Tonspuren auf der Filmrolle oder durch ein herstellerspezifisches Zeitcodesignal auf der Filmrolle. Dies bedeutet, dass für beide bekannten Ansätze, wie zuvor erläutert, neue Kopien der Filme zu meist erheblichen Kosten erstellt werden müssen. Dabei ermöglichen Audioformate wie Dolby Digital und SDDS zwar moderne Audioerlebnisse, weisen jedoch immer noch keine Timecodes für die Synchronisation von beispielsweise Untertiteln oder anderssprachigen Versionen der Filmvertonung auf.

Frank Jordan und Jesper Dannow schlagen daher in ihrer Veröffentlichung "Generating Timecode Information from Analog Sources", 118. Convention, Audio Engineering Society vom 28. bis 31. Mai 2005, in Barcelona, Spanien, Convention Paper 6473, vor, einen Timecode auf der Basis der analogen Tonspur zu erzeugen. Die Veröffentlichung beschreibt ein System mit der Bezeichnung "Soundtitles", das an die analoge Tonspur des Projektors angeschlossen wird. Basierend auf einer bearbeiteten, digitalen Kopie der Tonspur und dem analogen Signal des Filmprojektors wird eine Zeitinformation bzw. ein Timecode durch Kreuzkorrelation bestimmt. Das System "Soundtitles" besteht aus drei Komponenten. Das Kernmodul "Sync Tracker erzeugt das Zeitcodesignal. Das zweite Modul, der "Sync Player" erzeugt Untertitel, die mit beispielsweise einem Beamer projiziert werden. Das dritte Modul, der "Clip Player" spielt synchronisierte Audio-Clips ab, die über kabellose Kopfhörer an den Kinobesucher übertragen werden.

Nachteilig an dem System "Sound Titles" ist jedoch, dass keine Lippensynchronität hergestellt werden kann, da immer noch ein zeitlicher Versatz von fast 100 ms bestehen bleibt. Ein Zeitversatz zwischen Bild und Ton von ca. 100 ms wird jedoch vom Zuschauer als störend wahrgenommen.

Die Patentschrift US 5,040,081 beschreibt ein Verfahren zur Synchronisierung einer Vielzahl von Signalen zu einem gewünschten Signal. Das Verfahren bietet Echtzeit-Synchronisation von ähnlichen Audio-Signalen und damit in Bezug stehenden Bildfolgen, entweder aus Video oder aus Film, ohne dass eine separate Referenz oder Trägerfrequenz zu beiden Signalen hinzugefügt werden muss. Ein Slave-Signal wird dabei mit einem Master-Signal synchronisiert. Die Slave- und Master-Signale werden gefiltert und bestimmte Frequenzen werden analysiert. Die daraus resultierenden Ergebnisse liefern Signatur-Informationen über die Signale. Diese Signatur-Information wird in eine relativ geringen Zahl von Bits digitalisiert, so dass ein Vergleich zwischen Master- und Slave-Signalen in Echtzeit durchgeführt werden kann.

Patentschrift US 5,087,980 beschreibt ein Verfahren zur Synchronisation von Aufnahmen, bei der beide Aufnahmen jeweils mit einem Time-Code versehen sind, die dann zur Synchronisation herangezogen werden.

Die Patentschrift JP 02 029 963 A beschreibt ebenfalls eine Synchronisation, bei der sowohl ein "Master" wie auch ein "Slave" Zeit-Codes aufweisen, die über einen Komparator verglichen werden, um eine Synchronisation herbeizuführen.

Die Aufgabe der vorliegenden Erfindung besteht darin, ein verbessertes Konzept für die Durchführung einer Korrelation zu schaffen, um beispielsweise die zeitliche Verzögerung zwischen einem Videosignal eines Films und einem nicht auf dem Film gespeicherten Tonsignal oder einem oder einer Mehrzahl von anderen Filmereignissen zu reduzieren und insbesondere für ein Tonsignal Lippensynchronität zu erreichen.

Diese Aufgabe wird durch eine Vorrichtung zum Durchführen einer Korrelation zwischen einem Testtonsignal und einem Referenztonsignal gemäß Patentanspruch 1, ein Verfahren zum Durchführen einer Korrelation zwischen einem Testtonsignal und einem Referenztonsignal gemäß Anspruch 11 und einem Computerprogramm gemäß Patentanspruch 12 gelöst.

Der vorliegenden Erfindung liegt die Erkenntnis zugrunde, dass eine Bestimmung einer zeitlichen Verschiebung zwischen zwei Signalen mittels Korrelation dann ein optimales Korrelationsergebnis erzeugt, wenn die zwei Signale beispielsweise denselben Filmabschnitt durch dieselben Abtastwerte darstellen. Vorraussetzung dafür ist, dass beide Signale diesen Abschnitt mit derselben Abtastrate abtasten bzw. die Verhältnisse von Abtastrate zu Abspielgeschwindigkeit des digitalen Abbilds und des abgespielten Films übereinstimmen.

Erfindungsgemäß wird daher ein Vorrichtung zum Durchführen einer Korrelation zwischen einem Testtonsignal, das mit variabler Geschwindigkeit abspielbar ist, und einem Referenztonsignal, das eine digital gespeicherte Version des Testtonsignals ist, mit folgenden Merkmalen: einer Einrichtung zum Ermitteln eines Maßes für eine Testabspielgeschwindigkeit des Testtonsignals, einer Einrichtung zum Variieren einer Testabtastrate mit der das Testtonsignal abgetastet wird, um abhängig von dem Maß für die Testabspielgeschwindigkeit ein modifiziertes Testtonsignal zu erzeugen, oder zum Variieren einer Referenzabtastrate des digital gespeicherten Referenztonsignals, um abhängig von dem Maß für die Testabspielgeschwindigkeit ein modifiziertes Referenztonsignal zu schaffen, wobei die Einrichtung zum Variieren ausgebildet ist, um die Testabtastrate oder die Referenzabtastrate so zu variieren, dass eine Abweichung zwischen einer Testabspielgeschwindigkeit, die dem Testtonsignal zugeordnet ist, oder einer Referenzabspielgeschwindigkeit, die dem modifizierten Referenztonsignal zugeordnet ist, reduziert ist, oder dass eine Abweichung zwischen einer Testabspielgeschwindigkeit, die dem modifizierten Testtonsignal zugeordnet ist, und einer Referenzabspielgeschwindigkeit, die dem Referenztonsignal zugeordnet ist, oder dass eine Abweichung zwischen einer Testabspielgeschwindigkeit, die dem modifizierten Testtonsignal zugeordnet ist, und einer Referenzabspielgeschwindigkeit, die einem modifizierten Referenztonsignal zugeordnet ist, reduziert ist, und einer Einrichtung zum Vergleichen des modifizierten Testtonsignals und des Referenztonsignals, oder des Testtonsignals und des modifizierten Referenztonsignals, oder des modifizierten Testtonsignals und des modifizierten Referenztonsignals, um ein Ergebnis der Korrelation zu erhalten.

Bevorzugte Ausführungsbeispiele sind daher ausgebildet, das Testtonsignal mit drei Referenztonsignalen unterschiedlicher Referenzabtastrate bzw. einer unterschiedlichen Abtastratenkonversion zu korrelieren, um ein Mass für die Abspielgeschwindigkeit des Testtonsignals zu ermitteln bzw. die Abweichung der Abspielgeschwindigkeiten zu reduzieren.

Die Vorrichtung und das Verfahren zum Durchführen einer Korrelation zwischen einem Testtonsignal und einem Reiferenztonsignal kann in einer Vorrichtung zum Erzeugen eines Steuersignals für ein Filmereignissystem, dass Filmereignisse mit einer Bildwiedergabe synchronisiert, eingesetzt werden, als beispielsweise Einrichtung zum Vergleichen. Beispiele für Filmereignisse sind der Audio-Ton, Untertitel und Spezialeffekte, wobei Spezialeffekte z.B. Luftströmungen, Wackeln an den Kinostühlen, Gerüche oder Lichteffekte an Seiten- und Rückwand umfassen können. Dabei sind bezüglich des Audio-Ereignisses sowohl unterschiedliche Sprachen, wie z.B. gleichzeitiges Abspielen der Originalversion und von Übersetzungen in andere Sprachen, als auch verschiedene Audio-Techniken möglich, wie z.B. die Synchronisierung von digitalen Surround-Systemen wie der Wellenfeldsynthese. Dabei dienen die Vorrichtung oder das Verfahren zum Durchführen der Korrelation insbesondere zur Synchronisation bzw. Anpassung einer "Abspielgeschwindigkeit" der zusätzlichen Filmereignisse mit der Abspielgeschwindigkeit des Films.

Auch wenn die zuvor beschriebenen und noch folgenden Beispiele von einem Kinobesucher oder einem Film sprechen, so beschränkt sich die Erfindung nicht nur auf Kinofilme für einen Kinobesucher, sondern bezieht sich allgemein auf Filme bzw. Audio-Video-Signale, unabhängig davon, ob es sich dabei um auf Filmen oder anderen Datenträgern und Speichermedien, z.B. Magnetbänder oder Festplatten, gespeicherte Filminformationen handelt. Darüber hinaus kann die Erfindung auch für reine Tonsysteme ohne Video eingesetzt werden oder beispielsweise mittels einer Video-ID auch zur Synchronisation von reinem Videomaterial, d.h. ohne Ton, mit beliebigen Ereignissen verwendet werden.

Bevorzugte Ausführungsbeispiele der vorliegenden Erfindung werden nachfolgend Bezug nehmend auf die beiliegenden Zeichnungen detailliert erläutert. Es zeigen:

Fig. 1 ein prinzipielles Blockschaltbild eines bevorzugten Ausführungsbeispiels einer Vorrichtung zum Erzeugen eines Steuersignals für ein Filmereignissystem;

Fig. 2a ein prinzipielles Blockschaltbild eines Ausführungsbeispiels einer Vorrichtung zum Durchführen einer Korrelation;

Fig. 2b ein prinzipielles Blockschaltbild eines bevorzugten Ausführungsbeispiels einer Vorrichtung zum Durchführen einer Korrelation;

Fig. 2c.1 einen beispielhaften Abschnitt eines Films

Fig. 2c.2 einen beispielhaften Verlauf eines Tonsignals des in Fig. 2c.1 dargestellten Abschnitts des Films bei einer variablen, ersten Abspielgeschwindigkeit und einer konstanten Testabtastrate;

Fig. 2c.3 einen beispielhaften Verlauf eines Tonsignals des in Fig. 2c.1 dargestellten Abschnitts des Films bei einer variablen, zweiten Abspielgeschwindigkeit und einer konstanten Testabtastrate;

Fig. 2c.4 einen beispielhaften Verlauf eines Tonsignals des in Fig. 2c.1 dargestellten Abschnitts des Films bei einer variablen, dritten Abspielgeschwindigkeit und einer konstanten Testabtastrate;

Fig. 2d.1 zwei beispielhafte Abschnitte eines Films;

Fig. 2d.2 einen beispielhaften Verlauf eines Referenztonsignals des Films;

Fig. 2d.3 einen beispielhaften Verlauf eines Testtonsignals, basierend auf einer ersten Abspielgeschwindigkeit und einer konstanten Testabtastrate, für einen Abschnitt des Films;

Fig. 2d.4 ein beispielhaftes erstes Korrelationsergebnis aus der Korrelation des Referenztonsignals gemäß Fig. 2d.2 und des Testtonsignals gemäß Fig. 2d.3;

Fig. 2d.5 zwei beispielhafte Abschnitte eines Films gemäß Fig.2d.1;

Fig. 2d.6 einen beispielhaften Verlauf eines Referenztonsignals des Films gemäß Fig. 2d.2;

Fig. 2d.7 einen beispielhaften Verlauf eines Testtonsignals, basierend auf einer zweiten Abspielgeschwindigkeit und einer konstanten Testabtastrate, für einen Abschnitt des Films;

Fig. 2d.8 ein beispielhaftes zweites Korrelationsergebnis aus der Korrelation des Referenztonsignals gemäß Fig. 2d.6 und des Testtonsignals gemäß Fig. 2d.7;

Fig. 3a ein prinzipielles Blockschaltbild eines bevorzugten Ausführungsbeispiels einer Vorrichtung zum Ermitteln einer Stelle in einem Film mittels einer Fingerabdruckdarstellung;

Fig. 3b.1 zwei Abschnitte eines Films;

Fig. 3b.2 einen beispielhaften Verlauf des Referenztonsignals für die zwei Abschnitte gemäß Fig. 3b.1;

Fig. 4 ein prinzipielles Blockschaltbild eines bevorzugten Ausführungsbeispiels einer Vorrichtung zum Ermitteln einer Stelle in einem Film mittels einer groben und einer nachfolgenden feinen Bestimmung der Stelle;

Fig. 5a ein prinzipielles Blockschaltbild eines bevorzugten Ausführungsbeispiels einer Vorrichtung zum Erzeugen eines Steuersignals für ein Filmereignissystem;

Fig. 5b.1 zwei Abschnitte eines Films;

Fig. 5b.2 einen beispielhaften Verlauf eines Referenztonsignals für einen ersten Abschnitt des Films;

Fig. 5b.3 einen beispielhaften Verlauf eines Testtonsignals für einen zweiten Abschnitt des Films;

Fig. 5b.4 ein beispielhaftes Korrelationsergebnis aus der Korrelation des Referenztonsignals gemäß Fig.5b.2 und des Testtonsignals gemäß Fig. 5b.3;

Fig. 6a ein prinzipielles Blockschaltbild eines beispielhaften Filmvorführsystems mit einer Vorrichtung zum Erzeugen eines Steuersignals für ein Filmereignissystem und einem Filmereignissystem;

Fig. 6b ein prinzipielles Blockschaltbild eines beispielhaften Filmvorführsystems mit einer Vorrichtung zum Erzeugen eines Steuersignals mit einem beispielhaften Audio-Filmereignissystem;

Fig. 7 eine schematische Darstellung einer beispielhaften Zuordnung einer Zeitskala zu einer Filminformation;

Fig. 8 eine schematische Darstellung eines beispielhaf-ten Films mit aufgebrachten Filminformationen.

In der nachfolgenden Beschreibung der Erfindung bzw. der bevorzugten Ausführungsbeispiele werden für gleiche oder gleich wirkende Elemente gleiche Bezugszeichen verwendet.

Im Folgenden wird die Erfindung anhand von Ausführungsbeispielen näher erläutert, die als Filminformation das Tonsignal, das auf dem Film aufgebracht ist, nutzen. Dies soll jedoch die Erfindung nicht einschränken, sondern dient allein der Veranschaulichung.

Fig. 1 zeigt ein prinzipielles Blockschaltbild einer Vorrichtung zum Erzeugen eines Steuersignals für ein Filmereignissystem und einen beispielhaften Film 110, wie er zuvor bzgl. Fig. 8 erläutert wurde, wobei die Vorrichtung zum Erzeugen eines Steuersignals eine Einrichtung zum Speichern 120 der Filminformation, eine Einrichtung zum Empfangen eines von dem Film gelesenen Abschnitts 140, eine Einrichtung 160 zum Vergleichen des gelesenen Abschnitts mit der gespeicherten Filminformation 112, 114 und eine Einrichtung 180 zum Ermitteln des Steuersignals, basierend auf dem Vergleich und der Zeitskala aufweist.

Die gespeicherte Filminformation 112, 114 umfasst beispielsweise die Ton- bzw. Audio-Signale, die Bilder bzw. Video-Signale oder auch Marken, die schon heute auf Filmen zu finden sind, und z.B. festlegen, wo die Blende aufgeht bzw. ab wann Ton gespielt wird, bzw. wann der Film anhält. Die gespeicherten Audio- und/oder Videosignale liegen beispielsweise in digitalisierter Form vor, vorzugsweise in komprimierter Form, um den Speicherbedarf zu reduzieren.

Ein Vorteil der digitalisierten Speicherung liegt in der einfachen und vor allem fehlerfreien Vervielfältigbarkeit des gespeicherten Abbildes der Filminformationen.

Im Gegensatz zu herkömmlichen Systemen, bleibt der Film wie zuvor beschrieben unverändert, es wird lediglich einmal ein gespeichertes Abbild der Filminformationen erzeugt, z.B. bei der Herstellung des Films.

Bei dem Abspielen des Films mittels eines Filmabspielgerätes, beispielsweise eines Filmprojektors, wird beispielsweise das auf der Tonspur 114 enthaltende Tonsignal von der Einrichtung 140 zum Empfangen empfangen und für die Einrichtung 160 zum Vergleichen aufbereitet, beispielsweise mit einer gegebenen Abtastrate abgetastet und als Abschnitt einer gegebenen Länge bzw. einer gegebenen Anzahl von Abtastwerten weitergegeben.

Die Einrichtung 160 ist ausgebildet, diesen von dem Film gelesenen Abschnitt mit der gespeicherten Filminformation zu vergleichen, wobei die Einrichtung 160 zum Vergleichen ausgebildet sein kann, den gelesenen Abschnitt mit der gesamten gespeicherten Filminformation zu vergleichen, vorzugsweise jedoch den gelesenen Abschnitt mit einem Abschnitt der gespeicherten Filminformation vergleicht, um den Rechenaufwand zu minimieren. Der Vergleich kann beispielsweise mittels Kreuzkorrelation, aber auch mittels Berechnen des Unterschieds, z.B. durch Berechnung einer komprimierten Hash-Summe und Suche dieser in einer Datenbank erfolgen. Der Vergleich kann auf dem Tonsignal allein, dem Video-Signal allein, einem Vergleich des Ton-Signals und des Video-Signals sowie einer Kombination mit einer Auswertung der zuvor genannten Merkmale bestehen. Basierend auf dem Ergebnis des Vergleichs der Einrichtung zum Vergleichen 160 und der Zeitskala ermittelt die Einrichtung 180 zum Ermitteln das Steuersignal 190. Mittels des Steuersignals 190 wird ein Filmereignissystem gesteuert, das basierend auf dem Steuersignal 190 zeitsynchron zu dem abgespielten Film 110 beispielsweise WFS-Tonsignale oder Untertitel erzeugt. Dabei kann die Vorrichtung zum Erzeugen eines Steuersignals oder im Speziellen die Einrichtung zum Ermitteln des Steuersignals 180 so ausgebildet sein, dass das Steuersignal ein beliebiges Zeitcodeformat ist, properitär oder standardisiert wie z.B. das nach SMPTE (Society of Motion Picture and Television Engineers) standardisierte LTC-Zeitcodeformat (LTC = Longitudinal Time Code).

Zeitsynchron bedeutet, dass basierend auf dem Steuersignal 190 das Filmereignissystem einer der gerade vom Film abgespielten Stelle, der in der gespeicherten Filminformationen ein Zeitpunkt auf der Zeitskala zugeordnet ist, einem diesem Zeitpunkt der Zeitskala entsprechendes, gleichzeitiges Ereignis erzeugt wird.

Dabei kann abweichend von dem erläuterten Ausführungsbeispiel statt des Filmprojektors ein beliebiges Filmabspielgerät verwendet werden, beliebige Filmformate, z.B. Stummfilme (z.B. mit Synchronisation auf Basis von Videoinformationen), Filme mit analoger oder digitaler Tonspur, einer Tonspur oder mehreren parallelen Tonspuren verwendet werden, oder alternativ zu einem Film beliebige andere Speichermedien verwendet werden, beispielsweise Kassetten oder Festplatten, deren Format nicht geändert werden kann oder soll, um beispielsweise weiterhin mit dem Filmabspielgerät kompatibel zu sein, zu denen jedoch gleichzeitig andere Filmereignisse synchronisiert werden sollen.

In einem bevorzugten Ausführungsbeispiel wird das Tonsignal als Filminformation für die Synchronisation verwendet. Dabei wird der von dem Film gelesene Abschnitt mit einer gegebenen Abtastrate, die im Folgenden als Testabtastrate bezeichnet wird, abgetastet, um ein Testtonsignal zu erzeugen, und die gespeicherte Filminformation in digitaler Form gespeichert, wobei die gespeicherte Filminformation im Folgenden als Referenz-Signal bezeichnet wird, und das Testtonsignal und Referenztonsignal in der Einrichtung 160 zum Vergleichen mittels Kreuz-Korrelation verglichen werden.

In einem Ausführungsbeispiel sind die Testsignal-Abtastrate und die Referenzsignal-Abtastrate unveränderlich, das heißt konstant. Die Einrichtung 160 zum Vergleichen kann dann beispielsweise ausgebildet sein, um zu einem ersten Zeitpunkt auf der Basis eines ersten Testtonsignals und einem ersten Referenztonsignal ein erstes Korrelationsergebnis zu erzeugen, um einen ersten Zeitpunkt der Zeitskala zu bestimmen, und zu einem zweiten Zeitpunkt ein zweites Testtonsignal und einem zweiten Referenztonsignal ein zweites Korrelationsergebnis zu erzeugen, um einen zweiten Zeitpunkt der Zeitskala zu bestimmen, um daraus beispielsweise eine Zeitdifferenz bzw. Abspielgeschwindigkeit zu bestimmen oder im Vergleich zu einer Soll- oder Referenzabspielgeschwindigkeit eine Geschwindigkeitsdifferenz zu bestimmen. Auf dieser Basis bestimmt die Einrichtung 180 zum Ermitteln des Steuersignals das Steuersignal, um beispielsweise das Filmereignissystem zu synchronisieren.

Nachteilig an einer konstanten Abtastrate ist jedoch, dass sich bei einer sich verändernden Testabspielgeschwindigkeit das Korrelationsergebnis verschlechtert, und damit auch die Genauigkeit der Bestimmung des Zeitpunktes bzw. der Stelle im Film ungenauer wird und damit die Synchronisation schlechter wird. Dieser Nachteil kann durch Variation der Abtastraten, also der Testabtastrate und/oder der Referenzabtastrate, kompensiert werden.

Fig. 2a zeigt ein prinzipielles Blockschaltbild einer Vorrichtung zum Durchführen einer Korrelation zwischen einem Testtonsignal, das mit einer variablen Abspielgeschwindigkeit abspielbar ist und einem Referenztonsignal, das eine digital gespeicherte Version des Testtonsignals ist, wobei die Vorrichtung zum Durchführen einer Korrelation eine Einrichtung 210 zum Ermitteln eines Maßes für eine Testabspielgeschwindigkeit, eine Einrichtung 230 zum Variieren einer Testabtastrate oder einer Referenzabtastrate und eine Einrichtung 250 zum Vergleichen aufweist. Die Einrichtung 230 ist ausgebildet, um eine Testabtastrate, mit der das Testtonsignal 270 abgetastet wird, zu variieren, um ein modifiziertes Testsignal 272 zu erzeugen, oder um eine Referenzabtastrate zu variieren, um auf der Basis eines Referenztonsignals 274 ein modifiziertes Referenztonsignal 276 zu erzeugen. Die Einrichtung 230 zum Variieren ist ferner ausgebildet, die Testabtastrate oder Referenzabtastrate so zu variieren, dass eine Abweichung zwischen einer Testabspielgeschwindigkeit, die dem Testtonsignal zugeordnet ist, oder einer Referenzabspielgeschwindigkeit, die dem modifizierten Referenztonsignal 276 zugeordnet ist, reduziert ist, oder dass eine Abweichung zwischen einer Testabspielgeschwindigkeit, die dem modifizierten Testtonsignal 272 zugeordnet ist und einer Referenzabspielgeschwindigkeit, die dem Referenztonsignal 274 zugeordnet ist, oder dass eine Abweichung zwischen einer Testabspielgeschwindigkeit, die dem modifizierten Testtonsignal 272 zugeordnet ist und einer Referenzabspielgeschwindigkeit, die einem modifizierten Referenztonsignal 276 zugeordnet ist, reduziert ist, wobei der Begriff Abspielgeschwindigkeit bzw. die Problematik einer variablen Abspielgeschwindigkeit im Folgenden noch näher erläutert wird.

Die Einrichtung 250 zum Vergleichen des modifizierten Testtonsignals 272 und des Referenztonsignals 274, oder des Testtonsignals 270 und des modifizierten Referenztonsignals 276, oder des modifizierten Testtonsignals 272 und des modifizierten Referenztonsignals 276 ist ausgebildet, um ein Ergebnis 278 der Korrelation zu ermitteln.

Das in Fig. 2a gezeigte Ausführungsbeispiel der Vorrichtung zum Durchführen einer Korrelation kann beispielsweise in einer Vorrichtung zum Erzeugen eines Steuersignals für ein Filmereignissystem, wie es beispielsweise in Fig. 1 gezeigt ist, als Einrichtung 160 zum Vergleichen eingesetzt werden.

Fig. 2b zeigt ein prinzipielles Blockschaltbild eines bevorzugten Ausführungsbeispiels einer Vorrichtung zum Durchführen einer Korrelation zwischen einem Testtonsignal und einem Referenztonsignal.

Fig. 2b zeigt eine Einrichtung 280 zum Speichern eines Referenztonsignals 274, das eine digitale Version des Testtonsignals 270 ist, wobei das Referenztonsignal 274 einmal basierend auf einer gegebenen Speicherreferenzabspielgeschwindigkeit und einer Speicherreferenzabtastrate erzeugt wurde.

Das Testtonsignal wird mit einer variablen Testabspielgeschwindigkeit abgespielt und mit einer Testabtastrate abgetastet, um das Testtonsignal 270 zu erzeugen.

Die Einrichtung 210 zum Ermitteln des Maßes für die Testabspielgeschwindigkeit des Testtonsignals 270 steuert auf der Basis des Maßes für die Testabspielgeschwindigkeit die Einrichtung 230 zum Variieren. Die Einrichtung 230 zum Variieren wiederum steuert einen Referenz- bzw. Abtastratenkonverter 232 und einen variablen Abtaster 234, wobei der Abtastratenkonverter 232 ausgebildet ist, aus dem Referenztonsignal, das auf der Speicherreferenzabspielgeschwindigkeit und einer Speicherreferenzabtastrate basiert, in ein modifiziertes Referenztonsignal 276 umzuwandeln, das einem Referenztonsignal entspricht, das auf einer anderen Speicherreferenzabspielgeschwindigkeit und/oder Speicherreferenzabtastrate basiert, und wobei der variable Abtaster 234 ausgebildet ist, das Testtonsignal mit einer variierten, also von der Standard- oder Grundabtastrate unterschiedlichen, Abtastrate abzutasten, um ein modifiziertes Testtonsignal 272 zu erzeugen.

Abweichend von Fig. 2b kann die Vorrichtung zum Durchführen einer Korrelation auch derart ausgebildet sein, dass das Testtonsignal 270 immer über den variablen Abtaster 234 der Einrichtung 250 zum Vergleichen zugeführt wird, wobei der variable Abtaster 234, dann derart ausgebildet ist, dass eine der variablen Testabtastraten der Standard- oder Grund-Abtastrate entspricht, und ferner ausgebildet sein, dass das Referenztonsignal 274 immer über den Referenzabtastratenkonverter 232 der Einrichtung 250 zum Vergleichen zugeführt wird, wobei der Referenzabtastratenkonverter 232 derart ausgebildet ist, dass er bei entsprechender Ansteuerung durch die Einrichtung 230 zum Variieren das Referenztonsignal 274 unmodifiziert an die Einrichtung 250 zum Vergleichen weitergibt.

Die in Fig. 2b gewählte Darstellung der getrennten Zuführung des Testtonsignals 270 gegenüber dem modifizierten Testtonsignals 272 und dem Referenztonsignal gegenüber dem modifizierten Referenztonsignals 276 zu der Einrichtung 250 zum Vergleichen, dient dazu, die alternativen Ausführungsmöglichkeiten bzw. Realisierungsmöglichkeiten darstellen zu können.

So ist beispielsweise in einem Ausführungsbeispiel, bei dem die Einrichtung 250 zum Vergleichen ausgebildet ist, das modifizierte Testtonsignal 272 mit dem nicht-modifizierten Referenzton-Signal 274 zu vergleichen, kein Referenzabtastratenkonverter 232 notwendig bzw. weist die Vorrichtung zum Durchführen einer Korrelation gemäß Fig. 2b keinen Referenzabtastratenkonverter 232 auf. Ebenso, weist eine Einrichtung 250 zum Vergleichen, die ausgebildet ist, das nicht-modifizierte Testtonsignal 270 mit dem modifizierten Referenztonsignal 246 zu vergleichen, keinen variablen Abtaster 234 auf.

In einem weiteren Ausführungsbeispiel ist die Einrichtung 280 zum Speichern eine Einrichtung zum Speichern einer Filminformation, wobei der gespeicherten Filminformation eine Zeitskala zugeordnet ist, und das Testtonsignal 270 beispielsweise ein Film-Tonsignal. Die Vorrichtung zum Durchführen einer Korrelation gemäß Fig. 2b kann dann beispielsweise als Einrichtung zum Vergleichen 160 gemäß Fig. 1 eingesetzt werden.

Fig. 2c.1 zeigt einen Abschnitt eines beispielhaften Films 110 mit einer Tonspur 114, wie in Fig. 1 zuvor beschrieben. In Fig. 2c.1 sind zwei Stellen des Films 110 eingezeichnet, eine erste Stelle, im Weiteren als Stelle $L_1$ bezeichnet, und eine zweite Stelle, im Weiteren als Stelle $L_2$ bezeichnet. Die zwei Stellen $L_1$ und $L_2$ definieren einen Abschnitt auf dem Film 110, der eine Länge von $\Delta L = L_1 - L_2$ aufweist.

Fig. 2c.2 zeigt einen beispielhaften Verlauf des Testtonsignals, das dem in Fig. 2c.1 beschriebenen Abschnitt zwischen der Stelle $L_1$ und $L_2$ zugeordnet ist, wobei ferner der Zeitpunkt zu dem die Stelle $L_1$ des Films abgespielt wird, als Zeitpunkt $T_1$ bezeichnet wird, und der Zeitpunkt, zu dem die Stelle $L_2$ des Films abgespielt wird, als Zeitpunkt $T_2$ bezeichnet wird. Die Zeitdauer $\Delta T = T_1 - T_2$ ist abhängig von der Länge des betreffenden Abschnitts und der Abspielgeschwindigkeit v des Films, es gilt:

$$\Delta T = \Delta L / v \quad \text{bzw.}$$

$$T_2 - T_1 = (L_2 - L_1) / v.$$

Bei Abtastung des Testtonsignals mit der Abtastrate f = 1 / Δt, wobei Δt die Abtastperiode ist und ΔT = n · Δt gilt, kann das Testtonsignal als Folge von n + 1 Abtastwerten, wie beispielhaft in Fig. 2c.2 mit n = 10 gezeigt, dargestellt werden.

Beim Abspielen des Films mit einer Abspielgeschwindigkeit v und einer Abtastrate f = 1 / Δt wird der Filmabschnitt zwischen $L_1$ und $L_2$ bzw. $T_1$ und $T_2$ beispielsweise in n Zeitabschnitte unterteilt bzw. durch n + 1 Abtastwerte dargestellt, wobei gilt:

$$n = \Delta L / (\Delta t \cdot v) \quad \text{bzw.}$$

$$n = \Delta L \cdot f / v,$$

das heißt, die Anzahl der Abtastperioden bzw. Abtastwerte für einen gegebenen Filmabschnitt ΔL ist proportional zur Abtastrate f bzw. antiproportional zur Abtastperiode Δt und antiproportional zur Abspielgeschwindigkeit v. Anders ausgedrückt, bei einem Abschnitt konstanter Länge ΔL muss der Quotient "f / v" bzw. das Produkt "Δt · v" konstant sein, wenn n oder die Anzahl der Abtastwerte n+1 konstant sein soll. Ist in diesem Fall der erste Abtastwert gleich, so sind unter der zuvor genannten Bedingung auch die einzelnen Abtastwerte gleich.

Entsprechend wird beim Erzeugen der gespeicherten Filminformation bzw. des Referenztonsignals bei einer Speicherabtastrate $f_{Speicher}$ und einer Speicherabspielgeschwindigkeit $V_{Speicher}$ der gespeicherte Abschnitt der Filminformation bzw. des Testtonsignals beispielsweise durch $n_{Speicher}$ + 1 Referenzabtastwerte dargestellt und gespeichert.

Zur Veranschaulichung des Sachverhalts, zeigen die Fig. 2c.2 bis 2c.4 beispielhafte Abtastungen oder Speicherungen des Filmabschnitts zwischen der Stelle $L_1$ und der Stelle $L_2$ für eine konstante Abtastrate f bzw. eine konstante Abtastperiode Δt und einer variablen Abspielgeschwindigkeit, wobei Fig. 2.c2 eine beispielhafte Abtastung oder Speicherung für eine erste Abspielgeschwindigkeit $v_1$ zeigt, Fig. 2c.3 eine Abtastung oder Speicherung desselben Filmabschnitts bei einer zweiten Abspielgeschwindigkeit $v_2$ zeigt, und Fig. 2c.4 eine Abtastung desselben Filmabschnitts für eine dritte Abtastgeschwindigkeit $v_3$ zeigt. Dabei ist in diesem Beispiel $v_1$ halb so gross wie $v_2$ und doppelt so gross wie $v_3$: $v_1 = v_2 / 2$ und $v_1 = 2 \cdot v_3$.

Alle drei in den Fig. 2c.2 bis 2c.4 dargestellten Tonsignale weisen denselben ersten Abtastwert an der Stelle $L_1$ bzw. zum entsprechenden Zeitpunkt $T_1$ auf. Daher wird entsprechend, wie in den Fig. 2c.2 bis 2c.4 beispielhaft dargestellt, die gespeicherte Bildinformation bzw. das Referenztonsignal in Fig. 2c.2 durch $n_1 + 1$ = 11 Abtastwerte dargestellt, in Fig. 2c.3 derselbe Filmabschnitt mit $n_2 + 1$ = 6 Abtastwerten dargestellt, und in Fig. 2c.4 derselbe Filmabschnitt mit $n_3 + 1$ = 21 Abtastwerten dargestellt.

Wie aus den Fig. 2c.2 bis 2c.4 ersichtlich ist, entspricht bei konstanter Abtastrate, eine Erhöhung der Abspielgeschwindigkeit v einer zeitlichen Stauchung des Tonsignals, d.h. eine Verdopplung der Abspielgeschwindigkeit $v_1$ aus Fig. 2c.2 führt wie in Fig. 2c.3 dargestellt zu einer Halbierung von $T_2 - T_1$ und n, und eine Reduzierung der Abspielgeschwindigkeit v zu einer zeitlichen Streckung des Tonsignals, d.h. eine Halbierung der Abspielgeschwindigkeit $v_1$ aus Fig. 2c.2 führt wie in Fig. 2c. 4 dargestellt zu einer Verdopplung von $T_2 - T_1$ und n.

Die Fig. 2d.1 und 2d.2 entsprechen im Wesentlichen den Fig. 2c.1 und 2c.2. Im Vergleich zu Fig. 2c.1 zeigt Fig. 2d.1 zwei zusätzliche Stellen, die einen Suchabschnitt oder ein Suchfenster bezüglich des Films und der darauf aufgebrachten Filminformationen definieren, wobei eine erste Stelle des Suchfensters mit $L_0$ bezeichnet wird, und eine zweite Stelle des Suchfensters mit $L_3$ bezeichnet wird, wobei der Abschnitt zwischen der Stelle $L_0$ und der Stelle $L_3$ größer ist als der Abschnitt, der durch die Stellen $L_1$ und $L_2$ definiert wird, bzw. es gilt $\Delta L_{Fenster} > \Delta L$ mit $\Delta L_{Fenster} = L_3 - L_0$ und $\Delta L = L_2 - L_1$. Entsprechend wurde in Fig. 2d.2 zusätzlich zu Fig. 2c.2 der Zeitpunkt $T_0$, der basierend auf einer gegebenen Abspielgeschwindigkeit den der Stelle $L_0$ zugeordneten Zeitpunkt darstellt und der Zeitpunkt $T_3$, der basierend auf einer gegebenen Abspielgeschwindigkeit den der Stelle $L_3$ zugeordneten Zeitpunkt darstellt, hinzugefügt.

Auf die Erzeugung der gespeicherten Filminformationen bzw. des Referenztonsignals und der zusätzlich gespeicherten Zeitskala übertragen, bedeutet dies, dass $T_0$ beispielsweise den Zeitpunkt auf der Zeitskala definiert, der der Stelle $L_0$ zugeordnet ist, der Zeitpunkt $T_1$ den Zeitpunkt auf der Zeitskala definiert, der der Stelle $L_1$, der Zeitpunkt $T_2$ den Zeitpunkt auf der Zeitskala definiert, der der Stelle $L_2$ und der Zeitpunkt $T_3$ den Zeitpunkt auf der Zeitskala definiert, der der Stelle $L_3$ auf dem Film zugeordnet ist.

Fig. 2d.3 entspricht der Fig. 2c.2.

Im Folgenden soll anhand der Fig. 2d.2 bis 2d. 4 ein prinzipieller Verlauf eines Vergleichs zweier Signale mittels Korrelation bzw. die Problematik einer variablen Abspielgeschwindigkeit bei einem Vergleich zweier Signale beispielhaft dargestellt und erläutert werden.

Dabei stellt Fig. 2d.3 eine aktuell abgelesene einer auf den Film aufgebrachten Filminformation bzw. das Testtonsignal 270 dar und Fig. 2d.2 eine gespeicherte Filminformation bzw. ein Referenztonsignal dar, wobei in einem optimalen Fall, der hier durch die Fig. 2d.2 und Fig. 2d.3 darstellt ist, die Speicherabspielgeschwindigkeit und die Speicherabtastrate, mit der das Referenztonsignal erzeugt wurde, mit der Abspielgeschwindigkeit des Testtonsignals und der Abtastrate des Testtonsignals übereinstimmen bzw. wie zuvor gezeigt, der Quotient aus Speicherabtastrate $f_{Speicher}$ und Speicherabspielgeschwindigkeit $v_{Speicher}$ mit dem Quotient aus der Abtastrate für das Testtonsignal f und der Abspielgeschwindigkeit des Testtonsignals v übereinstimmen. In diesem Fall kann das Referenztonsignal bzw. ein Abschnitt des Referenztonsignals, der durch $T_1$ und $T_2$ definiert ist, mit dem Testtonsignal, das den Abschnitt zwischen $T_1$ und $T_2$ darstellt, genauer gesagt deren Abtastwertefolgen, exakt übereinstimmen, und mittels Korrelation ein klares lokales Maximum bzw. ein Korrelations-Peak gewonnen werden, wie dies beispielhaft in Fig. 2d. 4 gezeigt ist.

Die Position des Peaks wiederum gibt die zeitliche Verschiebung des Testtonsignals gegenüber dem Referenztonsignal bzw. dem Suchfenster an. Darauf basierend kann dann der aktuelle Zeitpunkt bezüglich der gespeicherten Zeitskala bestimmt werden.

Die Fig. 2d.5 bis 2d.8 zeigen im Unterschied zu den Fig. 2d.1 zu 2d.4 ein Beispiel, bei dem die Abspielgeschwindigkeit des Testtonsignals, dargestellt in Fig. 2d.7 gegenüber der Abspielgeschwindigkeit des Testtonsignals, wie es in Fig. 2d.2 gezeigt wird, verringert ist.

Fig. 2d.5 entspricht der Fig. 2d.1. Fig. 2d.6 entspricht der Fig. 2d.2, das heißt, Fig. 2d.6 stellt einen beispielhaften Verlauf eines Referenztonsignals dar, das auf einer Speicherabtastrate $f_{Speicher}$ und einer Speicherabspielgeschwindigkeit $v_{Speicher}$ basiert. Fig. 2d.7 zeigt einen beispielhaften Verlauf bzw. eine beispielhafte Abtastung des Testtonsignals, basierend auf einer gegenüber 2d.3 bzw. Fig. 2d.6 unveränderten Testabtastrate f jedoch einer veränderten, reduzierten Abspielgeschwindigkeit v' des Testtonsignals.

Bezogen auf einen betrachteten Zeitabschnitt $\Delta T$ bedeutet dies, dass in dem gleichen Zeitabschnitt $\Delta T$ bei einer reduzierten Geschwindigkeit v' nur ein geringerer Abschnitt bzw. ein Abschnitt geringerer Länge $\Delta L'$ gemäß $\Delta L' = v' \cdot \Delta T$ von dem Film abgespielt wird, so dass bezogen auf den gerade abgespielten Film nach dem Zeitabschnitt $\Delta T$ nur eine Stelle $L'_2$, die vor der Stelle $L_2$ liegt, erreicht wird, wie dies in Fig. 2d.5 dargestellt ist. Bezogen auf das Referenztonsignal und der diesem zugeordneten Zeitskala ist der Stelle $L'_2$ der Zeitpunkt $T'_2$ der Zeitskala zugeordnet, wie dies in Fig. 2d.7 gezeigt wird.

Bezogen auf die einzelnen Abtastwerte des Testtonsignals bedeutet dies, dass der durch die Tonspur des Films vorgegebene "räumliche" Verlauf des Testtonsignals unveränderlich ist, so dass bei einer geringeren Abspielgeschwindigkeit v' eine Abtastperiode $\Delta t$ bzw. ein entsprechender räumlicher Abtastabschnitt $\Delta l'$ entspricht, der kleiner ist als $\Delta l$, so dass, wie dies in Fig. 2d.7 gegenüber Fig. 2d.6 dargestellt ist, die Abtastwerte des Testtonsignals bezüglich des "räumlichen" Signalverlaufs nach links "wandern".

In dem entgegengesetzten Fall, dass die veränderte Abspielgeschwindigkeit v' größer ist als die Speicherabspielgeschwindigkeit $v_{Speicher}$, ergibt sich der umgekehrte Fall, im gleichen Zeitabschnitt $\Delta t$ wird ein größerer räumlicher Abschnitt $\Delta l$ abgespielt, so dass die Abtastwerte des Testtonsignals auf dem "räumlichen" Verlauf des Testtonsignals nach "rechts" auf dem Signalverlauf "wandern".

Bei einer veränderten Abspielgeschwindigkeit, unabhängig davon, ob sie höher oder niedriger als die Speicherabspielgeschwindigkeit ist, verschlechtert sich damit das Ergebnis des Vergleichs, da selbst unter sonst optimalen Bedingungen, das Testtonsignal und das Referenztonsignal zwei verschiedene räumliche Abschnitte des Films wiedergeben. Das Ergebnis des Vergleichs wird umso schlechter, je größer die Abweichung der Speicherabspielgeschwindigkeit von der Testabspielgeschwindigkeit abweicht. Bei einem Vergleich mittels Korrelation nimmt dabei der Betrag des lokalen Maximums bzw. Peaks ab und das Maximum selbst wird dadurch beispielsweise breiter und flacher, so dass die Zeitpunktbestimmung bezüglich der Zeitskala immer ungenauer wird, bis sie nicht mehr möglich ist.

Unter realen Bedingungen variiert die Abspielgeschwindigkeit des Testtonsignals beispielsweise nicht nur zwischen verschiedenen Filmabspielgeräten, sondern kann auch während eines Films variieren. Eine exakte Nachsteuerung ist daher unerlässlich, um während eines gesamten Films Synchronität zu gewährleisten.

Die Vorrichtung zum Durchführen einer Korrelation variiert daher die Abtastrate des Testtonsignals oder die Abtastrate des Referenztonsignals, um den nachteiligen Effekt einer variablen Ablaufgeschwindigkeit des Testtonsignals, wie er zuvor beschrieben wurde, gemäß der zuvor beschriebenen Bedingung, dass der Quotient aus Abtastrate und Abspielgeschwindigkeit des Testtonsignals und des Referenztonsignals gleich groß sein müssen, um den gleichen Filmabschnitt mit den gleichen Abtastwerten darzustellen, zu minimieren.

Bei einem digitalen Referenztonsignal, das zuvor mit einer Speicherabtastrate erzeugt wurde, wird die Änderung der Abspielgeschwindigkeit durch eine Abtastratenkonversion bewirkt, wobei das gespeicherte Referenztonsignal 274 beispielsweise entsprechend interpoliert wird, um ein Referenztonsignal mit der Abtastrate zu erzeugen, das der geänderten Abspielgeschwindigkeit entspricht.

Die Fig. 2d.1 - 2d.8 stellen vereinfachte Beispiele dar, bei denen der Anschaulichkeit halber davon ausgegangen wurde, dass die Speicherabspielgeschwindigkeit $v_{Speicher}$ einer normalen bzw. üblichen Abspielgeschwindigkeit eines Abspielgerätes zum Erzeugen eines Testtonsignals entspricht. Wie zuvor erläutert, ist jedoch der Quotient aus Abtastrate f und der Abspielgeschwindigkeit v die Größe, die für das Referenztonsignal und das Testtonsignal gleich sein müssen, um wie zuvor dargestellt, denselben Abschnitt des Films mit denselben Abtastwerten darstellen zu können. Beispielsweise kann bei dem Erzeugen des Referenztonsignals auch eine doppelte Abspielgeschwindigkeit genutzt werden, wenn gleichzeitig die Abtastrate verdoppelt wird.

In einem Ausführungsbeispiel gemäß Fig. 2b, kann die Einrichtung 210 zum Ermitteln, basierend auf dem Ergebnis 278 der Korrelation ein Maß für eine Testabspielgeschwindigkeit ermitteln.

Eine Möglichkeit besteht darin, ein einzelnes Korrelationsergebnis für die Bestimmung eines Maßes der Abspielgeschwindigkeit heranzuziehen, indem beispielsweise eine Amplitude eines Peaks mit einem vorgegebenen Schwellwert verglichen wird, um zu ermitteln, ob eine Abweichung zwischen einer Abspielgeschwindigkeit eines Testtonsignals und eines Referenztonsignals in einem vorgegeben Bereich liegt.

Bei einem bevorzugten Ausführungsbeispiel werden mindestens zwei verschiedene Referenztonsignale, die auf verschiedenen Referenzabtastraten basieren bzw. verschiedenen Referenzabspielgeschwindigkeiten entsprechen, mit dem Testtonsignal verglichen, um die Ergebnisse der Korrelation beispielsweise mittels einer Qualitätsbeurteilung, die bezüglich Fig. 5 noch näher erläutert wird, zu vergleichen, um aus diesen ein ähnlichstes Referenztonsignal und damit basierend auf der bekannten Abtastrate und der bekannten Speicherabspielgeschwindigkeit ein Maß für die Abspielgeschwindigkeit des Testtonsignals zu bestimmen. Dabei können die verschiedenen Referenztonsignale nacheinander gebildet und mit dem Testtonsignal verglichen werden oder gleichzeitig gebildet und verglichen werden.

Ein besonders bevorzugtes Ausführungsbeispiel der Vorrichtung zum Durchführen einer Korrelation erzeugt drei Referenztonsignale, die auf verschiedenen Referenzabtastraten basieren, wobei das Referenztonsignal der mittleren der drei Abtastraten auf der Referenzabtastrate des Referenztonsignals basiert, das in einem vorhergehenden Vergleich die beste Qualität bzw. maximale Übereinstimmung mit dem Testtonsignal aufwies, und die zwei anderen Referenztonsignale jeweils eine Referenzabtastrate die höher oder niedriger als die Referenzabtastrate des mittleren Referenztonsignals bzw. Referenzabtastrate ist, aufweisen. Dies wird von der Einrichtung 230 zum Variieren auf der Basis eines Ausgangssignals der Einrichtung 210 zum Ermitteln des Maßes für die Testabspielgeschwindigkeit gesteuert. So ist gewährleistet, dass die Referenzabtastrate bzw. die Referenzabspielgeschwindigkeit des Referenztonsignals an die Abspielgeschwindigkeit bzw. Referenzabtastrate des Testtonsignals angepasst wird.

Fig. 3a zeigt einen beispielhaften Film, wie in Fig. 8 dargestellt, und ein prinzipielles Blockschaltbild einer Vorrichtung zum Ermitteln einer Stelle in dem Film.

Das in Fig. 3a gezeigte Ausführungsbeispiel der Vorrichtung zum Ermittlen einer Stelle in einem Film kann beispielsweise in einer Vorrichtung zum Erzeugen eines Steuersignals für ein Filmereignissystem, wie es beispielsweise in Fig. 1 gezeigt ist, als Einrichtung 180 zum Ermitteln des Steuersignals eingesetzt werden.

Die Vorrichtung zum Ermitteln einer Stelle in einem Film weist einen Speicher 320 zum Speichern einer Referenzfingerabdruckdarstellung der Filminformation auf, wobei die Fingerabdruckdarstellung so ausgebildet ist, dass ein zeitlicher Verlauf der Fingerabdruckdarstellung von einem zeitlichen Verlauf der Filminformation abhängt, und wobei einer gespeicherten Referenzfingerabdruckdarstellung eine Zeitskala zugeordnet ist, eine Einrichtung 340 zum Empfangen eines von dem Film gelesenen Abschnitts aufweist, eine Einrichtung 350 zum Extrahieren einer Testfingerabdruckdarstellung aus dem eingelesenen Abschnitt und eine Einrichtung 360 zum Vergleichen der Testfingerabdruckdarstellung mit der Referenzfingerabdruckdarstellung aufweist, um auf der Basis des Vergleichs und der Zeitskala die Stelle in dem Film zu ermitteln.

Bei einem bevorzugten Ausführungsbeispiel umfasst die Fingerabdruckdarstellung eine Darstellung in Form einer spektralen Flachheit, wobei ein zeitlicher Verlauf der Fingerabdruckdarstellung einen zeitlichen Verlauf der spektralen Flachheit umfasst.

Fig. 3b.1 zeigt einen beispielhaften Film 110, wie in Fig. 8 dargestellt. Dabei entsprechen beispielsweise einer Stelle $L_{100}$ des Films bei einem Abspielen des Films mit einer gegebenen Abspielgeschwindigkeit der Zeitpunkt $T_{100}$ der Zeitskala, der Stelle $L_{103}$ der Zeitpunkt $T_{103}$ der Zeitskala, der Stelle $L_{113}$, die der Zeitpunkt $T_{113}$ der Zeitskala und der Stelle $L_{116}$ der dem Zeitpunkt $T_{116}$ der Zeitskala.

Bei dem Schritt des Erzeugens der Referenzfingerabdruckdarstellung der Filminformation wird in einem Ausführungsbeispiel für bestimmte räumliche bzw. zeitliche Abschnitte des Films ein Fingerabdruck bestimmt.

Fig. 3b.2 zeigt beispielsweise einen ersten Abschnitt, der den Abschnitt von der Stelle $L_{100}$ bis $L_{113}$ bzw. $T_{100}$ bis $T_{113}$ umfasst, und einen zweiten Abschnitt, der den Abschnitt von der Stelle $L_{103}$ bis zu der Stelle $L_{113}$ bzw. von dem Zeitpunkt $T_{103}$ bis zu dem Zeitpunkt $T_{116}$ umfasst. Basierend auf diesen Abschnitten wird auf der Basis von beispielsweise einer Spektralanalyse, Fourier-Transformation oder anderen Methoden der Merkmalsextraktion ein diesem Abschnitt zugeordneter Fingerabdruck erstellt. In einem besonders bevorzugten Ausführungsbeispiel umfasst der Fingerabdruck die spektrale Flachheit $\gamma_x^2$, die aus dem Verlauf des Leistungsdichtespektrums berechnet wird, so dass für jeden Abschnitt der Wert der spektralen Flachheit bestimmt wird, und sich in Abhängigkeit von dem zeitlichen Verlauf der Filminformationen, beispielsweise des Tonsignals, eine Folge von spektralen Flachheiten ergibt, die in dem Speicher 320 mit der zugeordneten Zeitskala gespeichert werden.

Abtastrate, Länge bzw. Dauer des Abschnitts oder der Abstand zwischen zwei aufeinander folgenden Abschnitten werden entsprechend der Anforderungen beispielsweise bzgl. Eindeutigkeit oder Genauigkeit der Bestimmung der Stelle in dem Film bestimmt. Je länger der Abschnitt desto eindeutiger ist die Ausprägung des Merkmals im allgemeinen, je höher die Abtastrate und/ oder je geringer der Abstand zwischen zwei Abschnitten, desto genauer kann die Stelle im Film bestimmt werden. Je höher die Abtastrate, je länger die Abschnitte und je geringer die Abstände zwischen den Abschnitten, desto höher ist der Speicherbedarf für das Referenzsignal bzw.

die Anforderung an die Rechenleistung bei der Signalverarbeitung.

Ein wesentlicher Vorteil der Fingerabdruckdarstellung in Form der spektralen Flachheit ist ihr geringer Speicherbedarf gegenüber beispielsweise einer kompletten Speicherung des Leistungsdichtespektrums für einen gleichen Abschnitt. Bevorzugt wird ein Verlauf bzw. eine Folge von spektralen Flachheiten als Fingerabdruck für einen Abschnitt verwendet.

Fig. 4a zeigt einen beispielhaften Film 110, wie in Fig. 8 dargestellt, sowie eine Vorrichtung zum Ermitteln einer Stelle in einem Film, der in einer zeitlichen Folge aufgebrachte Filminformationen aufweist.

Das in Fig. 4a gezeigte Ausführungsbeispiel der Vorrichtung zum Ermittlen einer Stelle in einem Film kann beispielsweise in einer Vorrichtung zum Erzeugen eines Steuersignals für ein Filmereignissystem, wie es beispielsweise in Fig. 1 gezeigt ist, als Einrichtung 180 zum Ermitteln des Steuersignals eingesetzt werden.

Die Vorrichtung zum Ermitteln einer Stelle weist einen Speicher 420 zum Speichern von Filminförmationen, die auf einem Film in zeitlicher Folge aufgebracht sind, auf, wobei den gespeicherten Filminformationen eine Zeitskala zugeordnet ist, eine Einrichtung 440 zum Empfangen eines von dem Film gelesenen Abschnitts und eine Synchronisationseinrichtung 460 auf, die ausgebildet ist, eine Folge von Abtastwerten des gelesenen Abschnitts, denen eine erste Abtastrate zugrunde liegt, und ein erstes Suchfenster der gespeicherten Filminformationen zu vergleichen, um ein Grobergebnis zu erhalten, und um eine Folge von Abtastwerten des gelesenen Abschnitts, dem eine zweite Abtastrate zugrunde liegt, und ein zweites Suchfenster der gespeicherten Filminformationen zu vergleichen, um ein Feinergebnis zu erhalten, das auf die Stelle des Films hinweist, wobei eine Position des zweiten Suchfensters in der gespeicherten Filminformation von dem Grobergebnis abhängt, und wobei das erste Suchfenster zeitlich länger als das zweite Suchfenster ist und wobei ferner die erste Abtastrate niedriger als die zweite Abtastrate ist.

Fig. 5a zeigt einen beispielhaften Film 110, wie in Fig. 8 dargestellt, sowie eine bevorzugtes Ausführungsbeispiel einer Vorrichtung zum Erzeugen eines Steuersignals für ein Filmereignissystem, das ausgebildet ist, auf der Basis einer auf dem Film aufgebrachten analogen Tonspur einen von dem Film gelesenen Abschnitt des Audiosignals bzw. Testtonsignals und einer gespeicherten, digitalen Version des Testtonsignals, im weiteren als Referenztonsignal bezeichnet, dem eine Zeitskala zugeordnet ist, durch Vergleichen des Testtonsignals und des Referenztonsignals mittels der Zeitskala das Steuersignal zu ermitteln.

Fig. 5a zeigt ein bevorzugtes Ausführungsbeispiel einer Vorrichtung zum Erzeugen eines Steuersignals für ein Filmereignissystem, das einen ersten Filmtonabtaster 542 aufweist, der mit einem ersten A/D-Wandler 544 verbunden ist (A/D = Analog/Digital), wobei der erste A/D-Wandler 544 mit einem ersten Merkmals-Extraktor 552, mit einer ersten Einrichtung 562 für eine Korrelation mit einem ersten Referenztonsignal, das auf einer ersten Abtastrate basiert, mit einer zweiten Einrichtung 564 für eine Korrelation mit einem zweiten Referenztonsignal, das auf einer zweiten Abtastrate basiert, und mit einer dritten Einrichtung 566 für eine Korrelation mit einem dritten Referenztonsignal, das auf einer dritten Abtastrate basiert, verbunden ist, wobei die Abtastrate im Englischen auch als sample rate bezeichnet wird. Ein Eingang der ersten Einrichtung 562 für eine Korrelation, ein Eingang einer zweiten Einrichtung 564 für eine Korrelation und ein Eingang der dritten Einrichtung 566 für eine Korrelation sind mit einem Ausgang eines Abtastratenkonverters 232, der im Englischen als sample rate converter (SRC) bezeichnet wird, verbunden.

Ein Ausgang der ersten Einrichtung 562 für eine Korrelation, ein Ausgang der zweiten Einrichtung 564 für eine Korrelation und ein Ausgang der dritten Einrichtung 566 für eine Korrelation sind mit einem Eingang einer ersten Einrichtung 568 zur Qualitätsbeurteilung verbunden. Die Einrichtung 568 zur Qualitätsbeurteilung wiederum ist mit dem Abtastratenkonverter 232 und einer Einrichtung 570 zur Abtasterwahl gekoppelt, wobei ein Ausgang der Einrichtung 570 zur Abtasterwahl mit einem Eingang eines Zeitgebers 582 verbunden ist. Der Zeitgeber 582 wiederum ist mit der gespeicherten Tonspur bzw. einer Einrichtung 522 zum Speichern der Tonspur verbunden, wobei ein Ausgang der Einrichtung 522 zum Speichern der Tonspur mit einem Eingang des Abtastratenkonverters 232 verbunden ist.

Ein Ausgang des ersten Merkmals-Extraktors 552 ist mit einem Eingang einer Einrichtung 554 zum Vergleichen eines Merkmals, die beispielsweise einen Merkmals-Klassifikator und eine Datenbank von Merkmalen aufweist, verbunden, wobei ein Ausgang der Einrichtung 554 zum Vergleichen eines Merkmals mit einem Eingang des Zeitgebers 582 verbunden ist.

Ein Ausgang des Zeitgebers 582 ist mit einem Eingang einer Einrichtung 584 zur Zeitcodeerzeugung gekoppelt, die eine Zeitcodedatenbank aufweist oder mit einer Zeitcodedatenbank gekoppelt ist, wobei ferner ein Ausgang der Einrichtung 584 zur Zeitcodeerzeugung mit einem Eingang einer Einrichtung 586 zum Zeitcodeglätten verbunden ist, wobei die Einrichtung 586 zum Zeitcodeglätten ausgebildet ist, einen Zeitcode 592 auszugeben, und wobei ferner ein Ausgang der Einrichtung 586 zum Zeitcodeglätten mit einem Eingang eines Wordclock-Generators 588 verbunden ist, der wiederum ausgebildet ist, ein Wordclock-Signal 594 auszugeben.

Die Vorrichtung zum Erzeugen eines Steuersignals für ein Filmereignissystem weist optional ferner einen zweiten Filmtonabtaster 542' auf, der mit einem zweiten A/D-Wandler 544' verbunden ist, wobei der zweite A/D-Wandler 544' mit einem zweiten Merkmalsextraktor 552', mit einer vierten Einrichtung 562' für eine Korrelation mit einem vierten Referenztonsignal, das auf der ersten Abtastrate basiert, mit einer fünften Einrichtung 564' für eine Korrelation mit einem fünften Referenztonsignal, das auf der zweiten Abtastrate basiert, und mit einer sechsten Einrichtung 566' für eine Korrelation mit einem sechsten Referenztonsignal, das auf der dritten Abtastrate verbunden ist.

Ein Ausgang der vierten Einrichtung 562' für eine Korrelation, ein Ausgang der fünften Einrichtung 564' für eine Korrelation und ein Ausgang der sechsten Einrichtung 566' für eine Korrelation sind mit einem Eingang einer zweiten Einrichtung 568' zur Qualitätsbeurteilung verbunden, wobei ein Ausgang der zweiten Einrichtung 568' zur Qualitätsbeurteilung mit einem Offset-Ausgleich 569 und ein weiterer Ausgang mit einem Eingang des Abtastratenkonverters 232 verbunden ist, und wobei ferner der die Einrichtung zum Offset-Ausgleich 569 mit der Abtasterwahl 570 verbunden ist.

Dabei wird der erste Filmtonabtaster 542, als auch als Hauptabtaster bezeichnet wird, so positioniert, dass der Vorrichtung zum Erzeugen eines Steuersignals genug Zeit bleibt, sich aufzusynchronisieren. Der erste Filmtonabtaster 542 liefert also ein vorverzögertes Signal. Zur Aufsynchronisationszeit addiert sich noch die Korrelationsfensterbreite bzw. Breite des Abschnitts des Testtonsignals. Anhand der Perforationen auf der Filmrolle lässt sich die Zeitdifferenz für die Vorverzögerung genau einstellen. Als erster Anhaltspunkt wird drei Sekunden empfohlen.

Im Folgenden wird die Funktionsweise des Ausführungsbeispiels der Vorrichtung zum Erzeugen eines Steuersignals für ein Filmereignissystem näher erläutert, wobei das Prinzip anhand des durch den ersten Filmtonabtaster 542 erzeugten Testtonsignals bzw. dessen Signalverarbeitungskette erläutert wird, da die zweite, optionale Signalverarbeitungskette bzw. Signalverarbeitung des durch den zweiten Filmtonabtaster 542' erzeugten Testtonsignals dem ersten entspricht, es wird daher lediglich auf die Einrichtung 569 zum Offset-Ausgleich spezifisch eingegangen.

Der erste Filmtonabtaster 542 liest von der Tonspur des Films das Tonsignal bzw. tastet von der Tonspur des Films das Tonsignal ab, und gibt dieses Signal an den ersten A/D-Wandler 544 weiter, wobei der erste A/D-Wandler 544 ausgebildet ist, um basierend auf der Abtastrate des ersten Filmtonabtasters 542 und der Abspielgeschwindigkeit des Films, von dem die Tonspur bzw. die Filminformation gelesen wird, ein digitales Audiosignal oder Testtonsignal zu erzeugen.

Auf der Basis des Testtonsignals 270 wird ein oder eine Mehrzahl von Merkmalen extrahiert.bzw. eine Testfingerabdruckdarstellung gebildet. Für die Merkmalsextraktion bzw. Fingerabdruckdarstellung wird beispielsweise die spektrale Flachheit als Merkmal bzw. Fingerabdruck eingesetzt. Die Testfingerabdruckdarstellung wird dann von der Einrichtung 554 zum Vergleichen eines Merkmals bzw. einer Fingerabdruckdarstellung mit einer Referenzfingerabdruckdarstellung verglichen, wobei wie zuvor dargelegt, die Fingerabdruckdarstellung so ausgebildet ist, dass ein zeitlicher Verlauf der Fingerabdruckdarstellung von einem zeitlichen Verlauf der Filminformationen abhängt, und wobei einer in der Einrichtung 554 zum Vergleichen eines Merkmals gespeicherten Referenzfingerabdruckdarstellung eine Zeitskala zugeordnet ist, und die Einrichtung 554 zum Vergleichen ausgebildet ist, um auf der Basis des Vergleichs der Testfingerabdruckdarstellung mit der Referenzfingerabdruckdarstellung und der Zeitskala eine Stelle in dem Film zu ermitteln bzw. ein Zeitcodesignal 554Z zu erzeugen.

Der Abtastratenkonverter erzeugt auf der Basis des gespeicherten Referenztonsignals 274 dasselbe Signal mit leicht unterschiedlichen Abtastraten, d.h. modifizierte Referenztonsignale, für die parallel zu berechnenden Korrelationen. Dabei ist der Fall, dass ein modifiziertes Referenztonsignal die gleiche Abtastrate wie das ursprüngliche Referenztonsignal aufweist hierin inbegriffen, so dass für die Diskussion der Fig. 5 im weiteren allgemein der Begriff Referenztonsignale verwendet wird.

Anders ausgedrückt, der Abtastratenkonverter 232 erzeugt drei Referenztonsignale 276 bzw. modifizierte Referenztonsignale 276, wobei ein erstes Referenztonsignal auf einer ersten Abtastrate basiert und der ersten Einrichtung 562 für eine Korrelation zugeführt wird, wobei ein zweites Referenztonsignal 276 auf einer zweiten Abtastrate basiert und der zweiten Einrichtung 564 für eine Korrelation zugeführt wird, und ein drittes Referenztonsignal 276 auf einer dritten Abtastrate basiert und einer dritten Einrichtung 566 für eine Korrelation zugeführt wird. Der Abtastratenwandler 232 liefert niedrig abgestufte, in der Abtastrate unterschiedliche Signale an die Korrelation bzw. an die Einrichtungen 562, 564, 566 für eine Korrelation, wobei die Abtastrate immer in Abhängigkeit zum vorherigen gemessenen maximalen Peak-to-Noise-Wert aus der Korrelation eingestellt wird. Jeweils eine Korrelation bekommt ein modifiziertes Referenztonsignal mit dieser Abtastrate, eine weitere Korrelation bekommt eine etwas geringere, eine Stufe niedrigere, und eine weitere Korrelation bekommt eine etwas höher gestufte Abtastrate. Dadurch wird sichergestellt, dass sich der Abtastratenwandler beispielsweise auf eine Geschwindigkeitsänderung des Analog-Tonsignals abstimmen bzw. aufsynchronisieren kann.

Die Einrichtung 522 zum Speichern der Tonspur und der Abtastratenkonverter 232 sind vorzugsweise ausgebildet, eine Fensterbreite von $2^n$ zu verwenden, um aufwandsgünstig große Korrelationsfenster mittels der schnellen Fourier-Transformation (FFT = Fast Fourier transformation) zu berechnen. Es können parallel auch mehr als drei Korrelationen berechnet werden, um schlagartige Sprünge in der Tonspur zu kompensieren. Das Korrelationsfenster wird groß gewählt, um einen deutlichen Korrelationspeak zu erhalten. Um die Erkennungsgenauigkeit des Korrelations-Peaks unter einem Sample bzw. einer Abtastperiode zu erhalten, kann mit Überabtastung des Eingangssignals bzw. Testtonsignals gearbeitet werden.

Die Einrichtung 522 zum Speichern der Tonspur gibt in Abhängigkeit vom zugeführten Zeitcodesignal 582Z des Zeitgebers 582 das Referenztonsignal in der Länge des Korrelationsfensters aus, wobei das Korrelationsfenster das Suchfenster ist, in dem das Testtonsignal gesucht wird.

Die erste Einrichtung 568 zur Qualitätsbeurteilung ist ausgebildet, eine Maximalwertsuche in der Kreuzkorrelierten der Signale bzw. der Beträge der Signale durchzuführen und die Güte der Kreuzkorrelierten, je nach Höhe des Korrelations-Peaks im Vergleich zu anderen Spitzen in der Kreuzkorrelierten zu gewichten, bzw. anhand des Peak-to-Noise-Abstands die Qualität jeder einzelnen Korrelation zu bestimmen.

Anhand der Qualitätsbeurteilung wird das Referenztonsignal mit der besten Güte bzw. Qualität bestimmt und anhand der Position des Peaks des Referenztonsignals mit der besten Qualität bzw. Güte die Verschiebung des Peaks gegenüber dem Suchfenster bestimmt, und beispielsweise als Zeitcodedifferenz zwischen gemessenem und derzeit gültigem Zeitcode oder als relativer Zeitcode ausgegeben.

Abhängig von dem Ergebnis der Qualitätsbeurteilung sendet die erste Einrichtung 568 zur Qualitätsbeurteilung ein Steuersignal 568A an den Abtastratenkonverter 232, das beispielsweise nur die drei Signalwerte "0", "+1" und "-1" unterscheidet, wobei beispielsweise bei "0" die Abtastraten der letzten Abtastraten-Konvertierung bzw. Korrelation beibehalten werden, weil das Korrelationsergebnis aus dem modifizierten Referenztonsignal mit der mittleren Abtastrate als das qualitativ hochwertigste bestimmt wurde, bei "+1" die Abtastraten gegenüber der letzten Abtastratenkonversion bzw. Korrelation um eine Stufe erhöht werden, weil das Korrelationsergebnis aus dem modifizierten Referenztonsignal mit der höchsten Abtastrate als das qualitativ hochwertigste bestimmt wurde, und bei "-1" die Abtastraten gegenüber der vorhergehenden Abtastratenkonversion bzw. Korrelation um eine Stufe reduziert werden, da die Korrelation aus dem Testtonsignal und dem modifizierten Referenztonsignal mit der niedrigsten Referenzabtastrate das beste Korrelationsergebnis bzw. den besten Peak-to-Noise-Abstand aufwies.

In anderen Worten, abhängig davon, mit welcher Abtastrate (erste, zweite oder dritte) der beste Korrelationspeak erhalten worden ist, wird der Abtastratenkonverter z.B. um ein Abtastraten-Deltawert erhöht oder erniedrigt, oder so angesteuert, dass er keine Abtastratenkonversion durchführt.

Dabei dient die Korrelation zur Adressierung von zwei wesentlichen Aspekten. Erstens, der Bestimmung der Stelle im Film bzw. Bestimmung des Zeitpunktes im Film auf Basis der Zeitcodedifferenz aus der Korrelation. Zweitens, der Bestimmung des Maßes für die Abspielgeschwindigkeit, um die optimale Referenzabtastrate bzw. optimale Abtastratenkonversion der Referenzabtastrate zu ermitteln. Wobei die Anpassung der Abtastraten bzw. das Nachempfinden angepasster Abspielgeschwindigkeiten wiederum bessere Korrelationsergebnisse ermöglicht und damit wiederum die Zeitpunktbestimmung bzw. Bestimmung der Stelle in dem Film verbessert und somit wiederum die Synchronisation und die Prädiktion verbessert.

Ein bevorzugtes Ausführungsbeispiel gemäß Fig. 5 ist ausgebildet, mittels einer Signalanalyse, um Signalteile mit bestimmten Charakteristika zu detektieren, um diese dann bei der Synchronisation auszublenden und damit falsche Detektionen bzw. Synchronisationen zu unterbinden oder zufällige Schwankungen der Zeitachse zu vermeiden.

Solche Charakteristika können beispielsweise die Lautheit des Signalteils oder die "Problemheit" eines Signals sein und die Signalanalyse bzw. Detektion problematischer Teile auf der Basis von SNR (Signal-to-Noise-Ratio), PNR (Peak-to-Noise), Spectral power oder Leitungsdichtespektrum, spektraler Flachheit oder der Mittelwertbildung einer zeitlichen Abfolge basieren.

Beispielsweise kann unterhalb eines Schwellwerts des Peak-to-Noise-Werts bzw. Spitze-Rausch-Abstands die Zeitcodedifferenz als ungültig erkannt werden. Oder werden beispielsweise mehrere Peaks mit ähnlichem Spitze-Rausch-Abstand festgestellt, kann die Zeitcodedifferenz ebenso als ungültig erkannt werden.

Des Weiteren ist zum Beispiel die Qualität von Korrelationen mit leisen Signalteilen, das heißt Signalteilen mit geringer Amplitude, wegen des höheren Quantisierungsgeräuschs bei der digitalen Abtastung geringer als von Korrelationen mit lauten Signalen, daher werden leise Signalteile anhand von Schwellwerten bzw. adaptiv ausgeblendet, um zufällige Schwankungen der Zeitachse zu vermeiden. Zusätzlich kann die Signalenergie ein weiteres Qualitätsmerkmal sein.

Ein weiteres Beispiel ist das Ausblenden von problematischen, weil wiederkehrenden Signalteilen, um Mehrdeutigkeiten und damit beispielsweise falsches Aufsynchronisieren zu vermeiden.

Problematische Signalteile bzw. Abschnitte können ferner zum Beispiel als Metadaten signalisiert werden, um unabhängig von der Qualität der aktuellen Korrelation, diese Signalteile auszublenden.

Die Einrichtung 584 zur Zeitcodeerzeugung ist ausgebildet, um basierend auf dem Zeitcodesignal 582Z des Zeitgebers 582, das beispielsweise auf einem internen oder proprietären Zeitcode basieren kann, beispielsweise in einen standardisierten Zeitcode bzw. ein Zeitcodesignal, das auf einem standardisierten Zeitcode basiert, umzuwandeln.

Der Zeitgeber 582 wird von einer internen Uhr gesteuert (Intervall bzw. Häufigkeit der Korrelationen), einem groben Audio-ID-Fingerabdruck bzw. Fingerabdruckdarstellung, beispielsweise dem Zeitcodesignal 554Z aus der Merkmalsbestimmung bzw. Fingerabdruckdarstellung, und der ermittelten Korrelationsdifferenz, beispielsweise dem aus der Korrelation ermittelten Zeitcodedifferenzsignal 570Z der Einrichtung 570 zur Abtasterwahl. Der Zeitgeber muss eine Priorisierung aus Korrelationssignal (höchste Priorität), Zeitcode aus der Merkmalsbestimmung und interner Uhr (niedrigste Priorität) vornehmen.

Die Einrichtung 586 zum Zeitcodeglätten ist ausgebildet, um das Zeitcodesignal 584Z zu glätten, um so beispielsweise einen stark springenden Zeitcode zu vermeiden oder falls Zeitcodes aus der Korrelation fehlen, sinnvolle Zwischenwerte zu finden, um z.B. Pausen in dem Analogton auszugleichen. Das von der Einrichtung 586 zum Zeitcodeglätten erzeugte Zeitcodesignal 592 ist vorzugsweise ein standardisierter Zeitcode mit dem das Filmereignissystem synchronisiert bzw. gesteuert wird. Das Zeitcodesignal 592 kann jedoch auch dafür genutzt werden, um über eine sehr langsam regelnde Phasenregelschleife (PLL = Phase Locked Loop) einen entsprechenden Sample-takt oder einen Abtasttakt zu erzeugen, falls das eingeschlossene Tonwiedergabesystem digitaler Art ist. Solche Phasenregelschleifen sind als fertige Geräte erhältlich und nicht Gegenstand dieses Patents.

Optional können mehr als ein Filmabtaster mit zeitlich unterschiedlichem Offset von der Projektionslinse zur Verbesserung der Robustheit bei Schäden am Film bzw. bei zur Synchronisation schlecht geeigneter Abschnitte verwendet werden.

Ein zweiter Filmtonabtaster 542' kann dann beispielsweise benutzt werden, da der zweite Filmtonabtaster 542' schon in herkömmlichen Kinosystemen vorhanden ist. Pausen in dem Analogton können hier durch die an unterschiedlichen Stellen am Kinofilm angebrachten Filmtonabtaster 542, 542' überbrückt werden, da die Wahrscheinlichkeit bei kurzen Pausen im Filmton steigt, das wenigstens ein Abtaster, der erste Filmtonabtaster 542 oder der zweite Filmtonabtaster 542', genug Signal für eine Korrelation und die damit verbundene Synchronisation liefert.

Des Weiteren können wahlweise verschiedene Abtaster, z.B. für Analog-Ton, Dolby-Digital-Ton (incl. Decoder), DTS-Digitalton (incl. DTS-Decoder) oder ein anderer Ton sowie einer Kombination aus den oben genannten als Referenztonspur und/oder Testtonspur verwendet werden.

Dabei können einzelne Spuren für den Vergleich unter Verwendung von Mittelung, Mehrheitsentscheidung oder Priorisierung, automatisch oder über Metadaten, der daraus erzeugten Zeitinformationen verwendet werden, sowie ein DownMix auf Mono.

Allgemein gesprochen, können verschiedene Abtaster für verschiedene Tonformate und/oder verschiedenen Filmabtastern mit zeitlich unterschiedlichen Offsets verwendet werden.

Die Verwendung eines Downmixes auf Mono hat den Vorteil, dass dann, wenn die Monospur als gespeicherte Tonspur verwendet wird, weniger gespeichert werden muss, als wenn man beispielsweise fünf Kanäle speichert.

Die Abspeicherung verschiedener, das heißt mehr als einer Tonspur, das heißt also kein Downmix, bedeutet, dass sämtliche Kanäle unabhängig voneinander abgespeichert werden und dass dann beispielsweise, wie zuvor erläutert, entsprechende Vergleiche bzw. Mehrheitsentscheidungen durchgeführt werden, um dann die Synchronisation unter Verwendung eines bestimmten Kanals, der tatsächlichen Tonspur und eines entsprechenden Kanals der gespeicherten Tonspur, durchzuführen.

Die Initialisierungsphase bzw. erste Synchronisation und die Resynchronisation nach einer Tonpause bilden zwei kritische Phasen während einer Filmvorführung bzw. einer Synchronisation eines Filmereignissystems.

Bevorzugte Ausführungsbeispiele berechnen daher am Anfang mehr als drei parallele Korrelationen, da noch keine Aufsynchronisation erfolgt ist, das heißt, mehr als drei Referenztonsignale verschiedener Abtastraten werden mit dem Testtonsignal verglichen bzw. korreliert, um schnellstmöglich die richtige Abtastrate bzw. Abspielgeschwindigkeit des Testtonsignals zu bestimmen. Hier können auch der Reihe nach verschiedene Abtastraten durchprobiert werden, bis eine der Korrelationen den besten Signalrauschabstand besitzt.

Alternativ oder zusätzlich liefern der erste Merkmalsextraktor 552 und die Einrichtung 554 zur Merkmalsklassifikation im Verbund mit der Datenbank einen groben absoluten Zeitcodewert, der einen grobe Stelle in dem Film definiert, um in einem zweiten Schritt beispielsweise durch die Korrelation eine feine Bestimmung der Stelle des Films bzw. eine feine Zeitcodebestimmung durchzuführen. Sobald die Synchronisation erfolgt ist, kann beispielsweise mit drei Korrelationen gearbeitet werden, um Veränderungen der Abspielgeschwindigkeit des Testtonsignals während der Filmvorführung nachzusynchronisieren.

Die Genauigkeit, mit der eine Stelle in einem Film bzw. einer der Stelle zugeordnete Zeitpunkt auf einer Zeitskala (Zeitcode) zugeordnet werden kann, hängt von der Abtastrate des Referenztonsignals und der Abtastrate des Testtonsignals ab, je höher die Abtastrate, desto genauer kann die Stelle in dem Film bestimmt werden. Eine geringere Abtastrate hat jedoch den Vorteil, dass mit der gleichen Anzahl von Abtastwerten ein längerer Abschnitt des Referenztonsignals oder des Testtonsignals dargestellt werden kann. Ein bevorzugtes Ausführungsbeispiel ist daher ausgebildet, in einem ersten Schritt eine grobe Bestimmung einer Stelle in einem Film zu ermitteln, indem ein längerer Abschnitt des Films durch ein Referenztonsignal mit geringerer Abtastrate dargestellt wird, und auch ein Testtonsignal durch Abtastung mit einer geringeren Abtastrate gewonnen wird. Auf Basis der groben Stelle im Film wird dann in einem zweiten Schritt ein Referenztonsignal höherer Abtastrate und ein Testton-Signal höherer Abtastrate für eine feine Bestimmung der Stelle in dem Film verwendet.

Anders ausgedrückt, wird die Fensterlänge beim Korrelieren angepasst. Zu Beginn des Suchens werden zeitlich lange Fenster, aber eine reduzierte Abtastrate der Signale verwendet, wenn ein Zeitpunkt ungefähr gefunden und nur nachgeführt werden soll, werden kurze Fenster evtl. sogar mit Überabtastung der Signale verwendet, um eine höhere zeitliche Genauigkeit zu erreichen.

In der Initialisierungsphase kann beispielsweise eine "kompatible Wiedergabe" des "alten" Audioformats erfolgen bis die genaue Position bestimmt ist.

Genauso kann eine "kompatible Wiedergabe" des "alten" Audioformats erfolgen, wenn die Synchronisation deutlich verloren gegangen ist, bis die genaue Position wieder bestimmt ist.

Die Einrichtung 570 zur Abtasterwahl und die Einrichtung zum Offset-Ausgleich 569 sind nur in Ausführungsbeispielen mit mehr als einem Filmtonabtaster notwendig. So entscheidet beispielsweise die Einrichtung 570 zur Abtasterwahl, ob sich das Ergebnis bzw. die Zeitcodedifferenz der ersten Einrichtung 568 zur Qualitätsbeurteilung (568Z) oder das Ergebnis bzw. die Zeitcodedifferenz 568Z' der zweiten Einrichtung 568' zur Qualitätsbeurteilung an den Zeitgeber 582 zur Bestimmung einer Stelle in dem Film bzw. eines Zeitcodes 582Z weiterleitet. Da der zweite Filmtonabtaster 542' das Testtonsignal an einer anderen Stelle des Films abtastet, wird die Differenz (Offset) zwischen der Stelle, an der der erste Filmtonabtaster 542 den Film abtastet zu der Stelle an der der zweite Filmtonabtaster 542' den Film abtastet durch die Einrichtung 569 zum Offsetausgleich ausgeglichen, so dass der Zeitgeber 582 die korrekte Zeitcodedifferenz 570Z unabhängig davon erhält, ob die Zeitcodedifferenz 568Z oder die Zeitcodedifferenz 568Z' gewählt wird, die bezüglich des zuletzt gespeicherten Zeitpunkts bzw. der zuletzt gespeicherten Stelle des Films, die im Zeitgeber gespeichert ist.

Abweichend von dem in Fig. 5a dargestellten Ausführungsbeispiel können die verschiedenen Referenztonsignale verschiedener Referenzabtastraten auch nacheinander erzeugt und mit dem Testtonsignal verglichen bzw. korreliert werden, um das Maß für die Abspielgeschwindigkeit des Testtonsignals bzw. die optimale Referenzabtastrate zu bestimmen. Alternativ können auch mehr als drei modifizierte Referenztonsignale mit dem Testtonsignal verglichen werden, parallel oder seriell, um nicht nur in der Anfangsphase eine schnelle Synchronisation zu ermöglichen, sondern auch während einer Filmvorführung das Filmereignissystem nach größeren Sprüngen im Film, z.B. durch Schnitte bzw. im Film fehlende Abschnitte verursacht, schneller wieder auf die aktuelle Stelle im Film aufzusynchronisieren.

Abweichend von dem in Fig. 5a dargestellten Ausführungsbeispiel kann eine Synchronisation eines Filmereignissystems auch auf Basis der auf den Film aufgebrachten Bilder erfolgen, sowohl für eine Auswertung von Merkmalen bzw. Fingerabdrücken als auch für eine Korrelation eines Test-Bildsignals mit einem oder einer Mehrzahl von Referenz-Bildsignalen.

Dabei kann, wie zuvor dargestellt die Korrelation von Audio- und/oder Videosignalen zur Bestimmung des zeitlichen Ortes in einem Audio- und/oder Videostroms eingesetzt werden, und ein synchrones Abspielen aufgrund dieser zeitlichen Bestimmung gesteuert werden.

Alternativ kann auch die Bestimmung einer Audio- und/oder Video-Signatur aus dem Rohmaterial in Form einer Audio-ID/Video-ID (ID = Identification) zum groben Bestimmen des Zeitpunkts in einem langen AV-Strom verwendet werden, um ein Aufsynchronisieren an beliebiger Stelle zu ermöglichen.

Der Grundansatz der Erfindung besteht darin, beispielsweise den schon vorhandenen Analogton noch einmal digital abzuspeichern, um dann mittels Korrelation und anderer Merkmalsbestimmung mit der Analogtonspur auf den Kinofilm zu synchronisieren. Das Ausgangssignal bzw. Steuersignal der Vorrichtung zum Erzeugen eines Steuersignals bzw. des Synchronisiergeräts kann ein beliebiges Zeitcodeformat sein. Vorzugsweise wird natürlich z.B. das SMPTE standardisierte LTC Zeitcodeformat eingesetzt. Für jeden Kinofilm muss bei der Produktion ein Datensatz für die Vorrichtung zum Erzeugen eines Steuersignals bzw. für das Synchronisationsgerät erstellt werden.

Für jeden Kinofilm wird bei der Produktion ein extra Datenträger für die vorher beschriebene Einrichtung zum Erzeugen eines Steuersignals bzw. Synchronisationsgerät erstellt. Der Datenträger beinhaltet die digitalisierte analoge Tonspur, z.B. im Dolby-Stereo-Format, wie er auf der Filmrolle zu finden ist, Merkmalsdaten zur Tonspur und dazu passende Zeitcodes.

Im Folgenden wird anhand der Fig. 5b.1 bis 5b. 4 eine beispielhafte Ermittlung einer Zeitcodedifferenz beschrieben.

Fig. 5b.1 zeigt einen beispielhaften Film 110 mit einer Tonspur 114, wie schon in Fig. 8 beschrieben.

Basierend auf dem Zeitcodesignal 582Z des Zeitgebers 582 wird aus der Einrichtung 522 zum Speichern einer Tonspur ein Referenztonsignal 274 ausgelesen und mittels der Vorrichtung zur Abtastratenkonvertierung 232 ein modifiziertes Referenzton-Signal gemäß Fig. 5b.2 erzeugt, das einen Filmabschnitt von der Stelle $L_0$ bis zu der Stelle $L_3$ bzw. dem der Stelle $L_0$ zugeordnete Zeitpunkt $T_0$ oder einem entsprechenden Zeitcode und dem der Stelle $L_3$ zugeordneten Zeitpunkt $T_3$ bzw. Zeitcode darstellt.

Fig. 5b.3 zeigt ein beispielhaftes Testtonsignal bzw. Abschnitt eines Testtonsignals, der durch den Anfangszeitpunkt $T_1$ und den Endzeitpunkt $T_2$ definiert ist und auf der Basis der Abtastrate $f = 1/\Delta t$ erzeugt worden ist.

Fig. 5b.4 zeigt das Ergebnis der Korrelation des modifizierten Referenztonsignals gemäß Fig. 5b.2 und des Abschnitts des Testtonsignals Fig. 5b.3. Die Zeitdifferenz $\Delta T'' = T_1 - T_0$ zwischen dem Anfangszeitpunkt $T_0$ des Suchfensters bzw. modifizierten Referenztonsignals aus Fig. 5b.2 und dem Zeitpunkt $T_1$ des Suchfensters bzw. Referenztonsignals ist die Zeitverschiebung, auf der basierend Zeitcodedifferenz bzw. der relative Zeitcode gebildet wird. Dabei ist der Zeitpunkt $T_1$ der Zeitpunkt oder die zeitliche Verschiebung des Testtonsignals, bei dem ein Abschnitt des des n = 11 Abtastwerte langen Referenztonsignals maximal mit dem Testtonsignal übereinstimmt, bzw. eine Korrelation des Referenztonsignals und des N = 11 Abtastwerte langen Testtonsignals als Korrelationsergebnis ein Maximum aufweist.

Dabei ist für die Qualitätsbeurteilung 568 die Kenntnis des absoluten Zeitpunktes $T_0$ oder des Zeitpunktes $T_1$ nicht notwendig, da beispielsweise der Zeitgeber 582 den letzten absoluten Zeitpunkt bzw. absoluten Zeitcode kennt und nur die Zeitcodedifferenz 570Z benötigt, um den aktualisierten absoluten Zeitpunkt bzw. Zeitcode zu bestimmen. Die Differenz kann beispielsweise aus der Position des Peaks gegenüber dem Zeitpunkt des Suchfensteranfangs dargestellt werden. In Fig. 5b. 4 ist der Peak beispielsweise der vierte Abtastwert, d.h das Testonsignal aus Fig. 5b.3 ist um "3 · Δt" gegenüber dem Referenztonsignal aus Fig. 5b.2 verschoben, wobei Δt die der modifizierten Abtastrate entsprechende Abtastperiode ist.

Damit kann die Zeitcodedifferenz 570Z beispielsweise aus dem Wert n = 3 bestehen. Hier kommt der Vorteil der an die variable Abspielgeschwindigkeit des Testtonsignals angepaßte Abtastrate bzw. Abspielgeschwindigkeit des Referenztonsignals vorteilhaft zum tragen, da auch das Δt an die Abspielgeschwindigkeit angepasst ist, eine genauere Bestimmung der Stelle in dem Film bzw. Verschiebung gegenüber dem Suchfenster möglich ist als bei einer festen Abtastrate des Referenztonsignals, da dann nur Vielfache dieser Abtastrate für eine Bestimmung der Stelle in dem Film erzeugt werden.

Dabei kann beispielsweise der Zeitpunkt $T_0$ des Suchfensters bzw. Referenztonsignals gleich dem $T_1$ der vorhergehenden Korrelation sein, da der Film nur vorwärts gespielt wird.

Fig. 6a zeigt ein Ausführungsbeispiel eines Filmsystems, bei dem eine Vorrichtung 100 zum Erzeugen eines Steuersignals 190 mit einem Filmereignissystem 600 gekoppelt ist, dabei erzeugt die Vorrichtung 100 zum Erzeugen eines Steuersignals auf der Basis des Films 110, wie in Fig. 8 gezeigt, das Steuersignal 190, beispielsweise einen Zeitcode, mit dem Filmereignissystem 600 synchronisiert wird.

Fig. 6b zeigt ein Filmsystem, das eine Vorrichtung 100 zum Erzeugen eines Steuersignals 100 aufweist und ein Wellenfeldsynthese-System 610 als beispielhaftes Filmereignissystem, wobei das Ausführungsbeispiel des Wellenfeldsynthesesystems 610 eine Einrichtung 620 zur Steuerung des Wellenfeldsynthesesystems, einen digitalen Speicher 622 für die Wellenfeldsynthese-Audiosignale und eine Mehrzahl von Lautsprechern 624 für das Wellenfeldsynthese-System aufweist. Basierend auf dem Film 110 bzw. einer beispielsweise analogen Filmtonspur 114 erzeugt die Vorrichtung 100 zum Erzeugen eines Steuersignals das Steuersignal 190, um zu einem ursprünglich analogvertonten Film lippensynchron ein Wellenfeldsynthese-Audioerlebnis zu ermöglichen.

Alternativ zu dem Wellenfeldsynthese-System 610 können natürlich auch andere Audiosysteme, beispielsweise digitale Audiosysteme bzw. digitale Sourround-Audiosysteme mittels der Vorrichtung 100 zum Erzeugen eines Steuersignals lippensynchron synchronisiert werden.

Fig. 7 zeigt einen beispielhaften Film, wie in Fig. 8 dargestellt, ein beispielhaftes digital gespeichertes Referenztonsignal 720 und eine Zuordnung einer Zeitskala.

Bei dem Erzeugen der gespeicherten Filminformation bzw. des Referenztonsignals, wird beispielsweise das analoge Tonsignal bei einer gegebenen Abspielgeschwindigkeit und einer gegebenen Abtastrate, beispielsweise 44,1 kHz, abgetastet und Tonabschnitte von beispielsweise 10 ms als ein sog. Audio-Frame abgespeichert, das heißt, das digitale Referenztonsignal liegt als Folge von Audio-Frames auf dem Speicher vor. Der zugeordnete Zeitpunkt einer Zeitskala kann dann beispielsweise darin bestehen, als Zeitcode bzw. Zeitskala die Audio-Frames von 0 oder 1 aufsteigend durch zu nummerieren, Timecode TC1 entspricht Audio-Frame AF1 in Fig. 7, oder beispielsweise den Anfangszeitpunkt oder Endzeitpunkt eines Audio-Frames als Zeitcode zu finden, so z.B. für den ersten Audio-Frame entweder 0 ms oder 10 ms, wenn ein Audio-Frame eine Dauer von 10 ms hat.

Timecodes weisen üblicherweise Formate wie Stunde:Minute:Sekunde:Frame auf, wobei sich der Frame üblicherweie auf Video-Frames mit z.B. 24 Frames pro Sekunde (Kinofilm) bezieht. Eine Zeitskala oder Timecode kann daher beispielsweise mehrere Audio-Frames einem Video-Frame zuordnen oder als kleinste Zeitskalaeinheit einen Audio-Frame definieren. Entsprechend kann der Zeitcode bzw. die Zeitskala dann beispielsweise 4 Audio-Frames einem Zeitcode zuordnen, siehe TC1' in Fig. 7, der vier Audio-Frames AF1 -AF4 umfasst, oder einen einzelnen Audi-Frame einem Zeitcode zuordnen, siehe TC1 in Fig. 7, dem ein Audio-Frame AF1 zugeordnet ist. Dabei können je nach Audioformat, die Audio-Frames auch sich zeitlich überlappenden Abschnitte des Audiosignals repräsentieren.

Das Steuersignal 190 kann beispielsweise als Zeitcode ausgebildet sein, aber auch als Folge von Pulsen, wobei beispielsweise jeder Puls einer Zeitskaleneinheit entspricht und ähnlich einem relativem Zeitcode das Filmereignissystem die Pulse aufakkumuliert, um sich mit dem Film zu synchronisieren.

Ein weiteres Ausführungsbeispiel, um weiterhin ein beispielsweise analoges Tonsignal als Fallback zur Verfügung zu haben, aber gleichzeitig auch einen Timecode für synchrone Zusatzdienste zu realisieren, bietet der Ansatz ein Watermark in das Audio- und/oder Videosignal einzubetten. Vorteil dieser Lösung ist, dass auch bei "schwierigen" Audiosignalen, z.B. sehr leisen Passagen oder selbst ähnlichen "monotonen" Geräuschen, eine saubere Taktgewinnung möglich ist. Für diese Variante ist im Prinzip der komplette Satz der einschlägigen Watermark-Patentansprüche, insbesondere im Bereich der Suche nach der korrekten Taktrate bzw. der Nachregelung der Abtastrate, sinnvoll. Der entscheidende Nachteil dieses Ansatzes ist jedoch, dass der eigentliche Film verändert bzw. eine neue Version oder Kopie des Films erstellt werden muss, um die Watermarks in das Audio- und /oder Video-Signal einbetten zu können.

Abhängig von den Gegebenheiten kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt, kann die Erfindung somit als ein Computer-Programm mit einem Programmcode zur Durchführung des Verfahrens realisiert werden, wenn das Computer-Programm auf einem Computer abläuft.

## Patentansprüche

1. Vorrichtung zum Durchführen einer Korrelation zwischen einem Testtonsignal (270), das mit variabler Abspielgeschwindigkeit abspielbar ist, und einem Referenztonsignal (274), das eine digital gespeicherte Version des Testtonsignals (270) ist, mit folgenden Merkmalen:

    einer Einrichtung (210) zum Ermitteln eines Maßes für die Abspielgeschwindigkeit des Testtonsignals (270);
    einer Einrichtung (230) zum Variieren einer Testabtastrate mit der das Testtonsignal (270) abgetastet wird, um abhängig von dem Maß für die Abspielgeschwindigkeit ein modifiziertes Testtonsignal (272) zu erzeugen, oder zum Variieren einer Referenzabtastrate des digital gespeicherten Referenztonsignals (274), um abhängig von dem Maß für die Abspielgeschwindigkeit ein modifiziertes Referenztonsignal (276) zu schaffen, wobei die Einrichtung (230) zum Variieren ausgebildet ist, um die Testabtastrate oder die Referenzabtastrate so zu variieren, dass eine Abweichung zwischen einer Abspielgeschwindigkeit, die dem Testtonsignal (270) zugeordnet ist, und einer Referenzabspielgeschwindigkeit, die dem modifizierten Referenztonsignal (276) zugeordnet ist, reduziert ist, oder dass eine Abweichung zwischen einer Abspielgeschwindigkeit, die dem modifizierten Testtonsignal (272) zugeordnet ist, und einer Referenzabspielgeschwindigkeit, die dem Referenztonsignal (274) zugeordnet ist, reduziert ist, oder dass eine Abweichung zwischen einer Abspielgeschwindigkeit, die dem modifizierten Testtonsignal (274) zugeordnet ist, und einer Referenzabspielgeschwindigkeit, die einem modifizierten Referenztonsignal (276) zugeordnet ist, reduziert ist, wobei ein Variieren einer Abtastrate ein Anpassen einer Abspielgeschwindigkeit nachbildet; und
    einer Einrichtung (250) zum Vergleichen des modifizierten Testtonsignals (272) und des Referenztonsignals (274), oder des Testtonsignals (270) und des modifizierten Referenztonsignals (276), oder des modifizierten Testtonsignals (272) und des modifizierten Referenztonsignals (276), wobei die Einrichtung (250) zum Vergleichen ausgebildet ist, um das Testtonsignal (270) durch eine Folge von Abtastwerten darzustellen und das Referenztonsignal durch eine Folge von Referenzabtastwerten darzustellen, um ein Ergebnis (278) der Korrelation zu erhalten.

2. Vorrichtung nach Anspruch 1, bei der die Abspielgeschwindigkeit des Testtonsignals und die Referenzabspielgeschwindigkeit derart definiert sind, dass das Testtonsignal (270) durch eine auf einem Film (110) aufgebrachte Tonspur (114) bestimmt ist, und
    die Abweichung zwischen der Abspielgeschwindigkeit, die dem Testtonsignal (270) zugeordnet ist, und der Referenzabspielgeschwindigkeit, die dem modifizierten Referenztonsignal (274) zugeordnet ist, oder
    die Abweichung zwischen der Abspielgeschwindigkeit, die dem modifizierten Testtonsignal (272) zugeordnet ist, und der Referenzabspielgeschwindigkeit, die dem Referenztonsignal (274) zugeordnet ist, oder
    die Abweichung zwischen der Abspielgeschwindigkeit, die dem modifizierten Testtonsignal (272) zugeordnet ist, und der Referenzabspielgeschwindigkeit, die dem modifizierten Referenztonsignal (274) zugeordnet ist,
    minimal ist, wenn ein Testtonsignal (270) oder modifiziertes Testtonsignal (272) und ein Referenztonsignal (274) oder modifiziertes Referenztonsignal (276) einem Tonspur-Abschnitt gleicher räumlicher Länge eine gleiche zeitliche Länge oder eine gleiche Anzahl zeitlich äquidistanter Abtastwerte zuordnen.

3. Vorrichtung nach einem der Ansprüche 1 oder 2, bei der die Einrichtung (250) zum Vergleichen ausgebildet ist, um das Testtonsignal (270) durch eine Folge von Abtastwerten darzustellen und das Referenztonsignal durch eine Folge von Referenzabtastwerten darzustellen, um die Folge der Testabtastwerte mit der Folge der Referenzabtastwerte zu korrelieren, wobei das Korrelationsergebnis darauf basiert, dass die Folge der Testabtastwerte gegenüber der Folge der Referenzabtastwerte jeweils um mindestens einen Abtastwert verschoben wird und für jede Verschiebung der entsprechende Korrelationswert durch Aufsummierung von Produkten einer paarweisen Multiplikation von Abtastwerten der Folge der Testabtastwerte und von Abtastwerten der Folge der Referenzabtastwerte oder deren Beträge ermittelt wird, so dass das Ergebnis der Korrelation eine Folge von Korrelationswerten ist, so dass das Ergebnis der Korrelation für den zeitlichen Verschiebungswert ein Maximum aufweist, bei dem die Folge der Testabtastwerte mit der Folge der Referenzabtastwerte maximal übereinstimmt.

**4.** Vorrichtung nach einem der Ansprüche 1 bis 3, bei der die Einrichtung (250) zum Vergleichen ausgebildet ist, um eine Mehrzahl von Referenztonsignalen jeweils mit demselben Testtonsignal (270) zu vergleichen, um eine Mehrzahl von Vergleichsergebnissen zu erhalten, wobei die Mehrzahl von Referenztonsignalen (274, 276) auf einer Mehrzahl von zueinander unterschiedlichen Referenzabtastraten basiert, und wobei ein Referenztonsignal (274, 276) der Mehrzahl von Referenztonsignalen (274, 276) das Referenztonsignal (274) oder ein modifiziertes Referenztonsignal (276) ist.

**5.** Vorrichtung nach Anspruch 4, bei der die Mehrzahl der Vergleichsergebnisse mittels Korrelation erhalten wird und die folgendes Merkmal aufweist:

eine Einrichtung (568) zur Qualitätsbeurteilung der Mehrzahl von Korrelationsergebnisse, um auf der Basis eines oder einer Mehrzahl von Kriterien ein dem Testtonsignal ähnlichstes Referenztonsignal aus der Mehrzahl der Referenztonsignale (274, 276) zu bestimmen.

**6.** Vorrichtung nach Anspruch 5, bei der die Einrichtung (568) zur Qualitätsbeurteilung ausgebildet ist, um für jedes Korrelationsergebnis einen Spitze-Rausch-Abstand zu bestimmen und ein Referenztonsignal (274,276) als das ähnlichste Referenztonsignal zu definieren, wenn es im Vergleich zu den anderen Referenztonsignalen (274,276) den höchsten Spitze-Rausch-Abstand aufweist.

**7.** Vorrichtung nach einem der Ansprüche 5 oder 6, bei der die Einrichtung (250) zum Vergleichen ausgebildet ist, um ein erstes Referenztonsignal, das auf einer ersten Referenzabtastrate basiert, mit dem Testtonsignal zu vergleichen, um ein erstes Korrelationsergebnis zu erhalten, um ein zweites Referenztonsignal, das auf einer zweiten Referenzabtastrate basiert, mit dem Testtonsignal zu vergleichen, um ein zweites Korrelationsergebnis zu erhalten, und um ein drittes Referenztonsignal, das auf einer dritten Referenzabtastrate basiert, mit dem Testtonsignal zu vergleichen, um ein drittes Korrelationsergebnis zu erhalten, wobei die zweite Referenzabtastrate größer als die erste Referenzabtastrate ist und die dritte Referenzabtastrate größer als die zweite Referenzabtastrate ist, und
bei der die Einrichtung (568) zur Qualitätsbeurteilung auf der Basis der Korrelationsergebnisse ein ähnlichstes Referenztonsignal bestimmt, und die ferner eine Einrichtung (230) zum Variieren aufweist, die ausgebildet ist, um für eine nächste Korrelation die erste, zweite, und dritte Referenzabtastrate nicht zu verändern, wenn das zweite Referenz-Testsignal das ähnlichste Referenz-Testsignal ist, die erste, zweite, dritte Abtast-Rate zu erhöhen, wenn das dritte Referenztonsignal das ähnlichste Referenztonsignal ist, und die erste, zweite und dritte Referenzabtastrate zu reduzieren, wenn das erste Referenztonsignal das ähnlichste Referenztonsignal ist.

**8.** Vorrichtung nach einem der Ansprüche 4 bis 7, bei der die Einrichtung (250) zum Vergleichen ausgebildet ist, die Mehrzahl von Referenztonsignalen (274, 276) mit dem Testtonsignal (270) parallel zu vergleichen.

**9.** Vorrichtung nach einem der Ansprüche 4 bis 7, bei der die Einrichtung (250) zum Vergleichen ausgebildet ist, um die Mehrzahl von Referenztonsignalen (274, 276) mit dem Testtonsignal (270) nacheinander zu vergleichen.

**10.** Vorrichtung nach einem der Ansprüche 1 bis 9, bei der die Einrichtung (210) zum Ermitteln ausgebildet ist, um basierend auf dem Ergebnis (278) der Korrelation das Maß für die Abspielgeschwindigkeit des Testtonsignals zu ermitteln.

**11.** Verfahren zum Durchführen einer Korrelation zwischen einem Testtonsignal (270), das mit variabler Abspielgeschwindigkeit abspielbar ist, und einem Referenztonsignal (274), das eine digital gespeicherte Version des Testtonsignals (270) ist, mit folgenden Schritten:

Ermitteln eines Maßes für die Abspielgeschwindigkeit des Testtonsignals (270); Variieren einer Testabtastrate, mit der das Testtonsignal (270) abgetastet wird, um abhängig von dem Maß für die Abspielgeschwindigkeit ein modifiziertes Testtonsignal (272) zu erzeugen, oder Variieren einer Referenzabtastrate des digital gespeicherten Referenztonsignals (274), um abhängig von dem Maß für die Testabspielgeschwindigkeit ein modifiziertes Referenztonsignal (276) zu schaffen, wobei die Testabtastrate oder die Referenzabtastrate so variiert werden, dass eine Abweichung zwischen einer Testabspielgeschwindigkeit, die dem Testtonsignal (270) zugeordnet ist, und einer Referenzabspielgeschwindigkeit, die dem modifizierten Referenztonsignal (276) zugeordnet ist, reduziert ist, oder dass eine Abweichung zwischen einer Testabspielgeschwindigkeit, die dem modifizierten Testtonsignal (272) zugeordnet ist, und einer Referenzabspielgeschwindigkeit, die dem Referenztonsignal (274) zugeordnet ist, reduziert ist, oder dass eine Abweichung zwischen einer Testabspielgeschwindigkeit, die dem modifizierten Testtonsignal (274) zugeordnet ist, und eine Referenzabspielgeschwindigkeit, die einem modifizierten Referenztonsignal (276) zugeordnet ist, reduziert ist, wobei ein Variieren einer Abtastrate ein Anpassen einer Abspielgeschwindigkeit nachbildet; und

Vergleichen des modifizierten Testtonsignals (272) und des Referenztonsignals (274), oder des Testtonsignals (270) und des modifizierten Referenztonsignals (276), oder des modifizierten Testtonsignals (272) und des modifizierten Referenztonsignals (276), wobei das Testtonsignal (270) durch eine Folge von Abtastwerten dargestellt wird und das Referenztonsignal durch eine Folge von Referenzabtastwerten dargestellt wird, um ein Ergebnis (278) der Korrelation zu erhalten.

**12.** Computerprogramm mit einem Programm-Code zum Ausführen eines Verfahrens gemäß Anspruch 11, wenn das Computerprogramm auf einem Computer abläuft.

## Claims

**1.** Apparatus for performing a correlation between a test sound signal (270) replayable at variable speed and a reference sound signal (274), which is a digitally stored version of the test sound signal (270), comprising:

means (210) for determining a measure for the replay speed of the test sound signal (270);

means (230) for varying a test sampling rate with which the test sound signal (270) is sampled, in order to generate a modified test sound signal (272) depending on the measure for the replay speed, or for varying a reference sampling rate of the digitally stored reference sound signal (274), in order to create a modified reference sound signal (276) depending on the measure for the replay speed, the means (230) for varying being formed to vary the test sampling rate or the reference sampling rate so that a deviation between a replay speed associated with the test sound signal (270) and a reference replay speed associated with the modified reference sound signal (276) is reduced, or that a deviation between a replay speed associated with the modified test sound signal (272) and a reference replay speed associated with the reference sound signal (274) is reduced, or that a deviation between a replay speed associated with the modified test sound signal (274) and a reference replay speed associated with a modified reference sound signal (276) is reduced, wherein varying a sampling rate reproduces adapting a replay speed; and

means (250) for comparing the modified test sound signal (272) and the reference sound signal (274), or the test sound signal (270) and the modified reference sound signal (276), or the modified test sound signal (272) and the modified reference sound signal (276), the means (250) for comparing being formed to represent the test sound signal (270) by a series of samples and represent the reference sound signal by a series of reference samples, in order to obtain a result (278) of the correlation.

**2.** Apparatus according to claim 1, wherein replay speed of the test sound signal and the reference replay speed are defined such that the test sound signal (270) is determined by a sound track (114) applied on a film (110), and

the deviation between the replay speed associated with the test sound signal (270) and the reference replay speed associated with the modified reference sound signal (274), or

the deviation between the replay speed associated with the modified test sound signal (272) and the reference replay speed associated with the reference sound signal (274), or

the deviation between the replay speed associated with the modified test sound signal (272) and the reference replay speed associated with the modified reference sound signal (274),

is minimal if a test sound signal (270) or modified test sound signal (272) and a reference sound signal (274) or modified reference sound signal (276) associate the same temporal length or the same number of temporally equidistant samples with a sound track portion of equal spatial length.

**3.** Apparatus according to one of claims 1 or 2, wherein the means (250) for comparing is formed to represent the test sound signal (270) by a series of samples and represent the reference sound signal by a series of reference samples, to correlate the series of test samples with the series of the reference samples, wherein the correlation result is based on the fact that the series of the test samples, with respect to the series of the reference samples, is each shifted by at least one sample, and the corresponding correlation value for each shift is determined by summation of products of a pair-wise multiplication of samples of the series of test samples and of samples of the series of the reference samples or their magnitudes, so that the result of the correlation is a series of correlation values, so that the result of the correlation for the temporal shift value comprises a maximum at which the series of the test samples maximally matches the series of the reference samples.

**4.** Apparatus according to one of claims 1 to 3, wherein the means (250) for comparing is formed to compare a plurality of reference sound signals each to the same test sound signal (270), to obtain a plurality of comparison results, wherein the plurality of reference sound signals (274, 276) is based on a plurality of mutually different reference sampling rates, and wherein a reference sound signal (274, 276) of the plurality of reference sound signals (274, 276) is the reference sound signal (274) or a modified reference sound signal (276).

**5.** Apparatus according to claim 4, wherein the plurality of the comparison results is obtained by means of correlation, comprising:

means (568) for quality evaluation of the plurality of correlation results, to determine a most similar reference sound signal from the plurality of reference sound signals (274, 276) on the basis of one or a plurality of criteria.

**6.** Apparatus according to claim 5, wherein the means (568) for quality evaluation is formed to determine a peak-noise distance for each correlation result and define a reference sound signal (274, 276) as the most similar reference sound signal if it comprises the highest peak-noise distance as compared with the other reference sound signals (274, 276).

**7.** Apparatus according to one of claims 5 or 6, wherein the means (250) for comparing is formed to compare a first reference sound signal based on a first reference sampling rate to the test sound signal to obtain a first correlation result, to compare a second reference sound signal based on a second reference sampling rate to the test sound signal to obtain a second correlation result, and to compare a third reference sound signal based on a third reference sampling rate to the test sound signal to obtain a third correlation result, wherein the second reference sampling rate is greater than the first reference sampling rate and the third reference sampling rate is greater than the second reference sampling rate, and
wherein the means (568) for quality evaluation determines a most similar reference sound signal on the basis of the correlation results, and which further comprises means (230) for varying, formed so as not to change the first, second and third reference sampling rates for a next correlation if the second reference test signal is the most similar reference test signal, increase the first, second, third sampling rates if the third reference sound signal is the most similar reference sound signal, and reduce the first, second and third reference sampling rates if the first reference sound signal is the most similar reference sound signal.

**8.** Apparatus according to one of claims 4 to 7, wherein the means (250) for comparing is formed to compare the plurality of reference sound signals (274, 276) to the test sound signal (270) in parallel.

**9.** Apparatus according to one of claims 4 to 7, wherein the means (250) for comparing is formed to compare the plurality of reference sound signals (274, 276) to the test sound signal (270) successively.

**10.** Apparatus according to one of claims 1 to 9, wherein the means (210) for determining is formed to determine the measure for the test replay speed of the test sound signal based on the result (278) of the correlation.

**11.** Method of performing a correlation between a test sound signal (270) replayable at variable speed and a reference sound signal (274), which is a digitally stored version of the test sound signal (270), comprising:

determining a measure for the replay speed of the test sound signal (270);
varying a test sampling rate with which the test sound signal (270) is sampled, in order to generate a modified test sound signal (272) depending on the measure for the test replay speed, or varying a reference sampling rate of the digitally stored reference sound signal (274), in order to create a modified reference sound signal (276) depending on the measure for the test replay speed, wherein the test sampling rate or the reference sampling rate are varied so that a deviation between a test replay speed associated with the test sound signal (270) and a reference replay speed associated with the modified reference sound signal (276) is reduced, or that a deviation between a test replay speed associated with the modified test sound signal (272) and a reference replay speed associated with the reference sound signal (274) is reduced, or that a deviation between a test replay speed associated with the modified test sound signal (274) and a reference replay speed associated with a modified reference sound signal (276) is reduced, wherein varying a sampling rate reproduces adapting a replay speed; and
comparing the modified test sound signal (272) and the reference sound signal (274), or the test sound signal (270) and the modified reference sound signal (276), or the modified test sound signal (272) and the modified reference sound signal (276), wherein the test sound signal (270) is represented by a series of samples and the reference sound signal is represented by a series of reference samples, in order to obtain a result (278) of the correlation.

**12.** Computer program with a program code for performing a method according to claim 11, when the computer program is executed on a computer.

**Revendications**

**1.** Dispositif pour réaliser une corrélation entre un signal de son de test (270) qui peut être reproduit avec une vitesse de reproduction variable et un signal de son de référence (274) qui est une version mémorisée numériquement du signal de son de test (270), aux caractéristiques suivantes:

un moyen (210) destiné à déterminer une mesure de la vitesse de reproduction du signal de son de test (270);
un moyen (230) destiné à faire varier un taux de balayage de test auquel est balayé le signal de son de test (270), pour générer un signal de son de test modifié (272) en fonction de la mesure de la vitesse de reproduction, ou à faire varier un taux de balayage de référence du signal de son de référence mémorisé numériquement (274), pour créer un signal de son de référence modifié (276) en fonction de la mesure de la vitesse de reproduction, le moyen (230) destiné à faire varier étant réalisé de manière à faire varier le taux de balayage de test ou le taux de balayage de référence de sorte qu'un écart entre une vitesse de reproduction associée au signal de son de test (270) et une vitesse de reproduction de référence associée au signal de son de référence modifié (276) soit réduit, ou qu'un écart entre une vitesse de reproduction associée au signal de son de test modifié (272) et une vitesse de reproduction de référence associée au signal de son de référence (274) soit réduit, ou qu'un écart entre une vitesse de reproduction associée au signal de son de test modifié (274) et une vitesse de reproduction de référence associée au signal de son de référence modifié (276) soit réduit, une variation d'un taux de balayage émulant une adaptation d'une vitesse de reproduction; und
un moyen (250) destiné à comparer le signal de son de test modifié (272) et le signal de son de référence (274), ou le signal de son de test (270) et le signal de son de référence modifié (276), ou le signal de son de test modifié (272) et le signal de son de référence modifié (276), le moyen (250) destiné à comparer étant réalisé de manière à représenter le signal de son de test (270) par une succession de valeurs de balayage et le signal de son de référence par une succession de valeurs de balayage de référence, pour obtenir un résultat (278) de la corrélation.

**2.** Dispositif selon la revendication 1, dans lequel la vitesse de reproduction du signal de son de test et la vitesse de reproduction de référenmce sont définies de sorte que le signal de son de test (270) soit déterminé par une piste sonore (114) appliquée sur un film (110), et
l'écart entre la vitesse de reproduction associée au signal de son de test (270) et la vitesse de reproduction de référence associée au signal de son de référence modifié (274), ou
l'écart entre la vitesse de reproduction associée au signal de son de test modifié (272) et la vitesse de reproduction de référence associée au signal de son de référence (274), ou
l'écart entre la vitesse de reproduction associée au signal de son de test modifié (272) et la vitesse de reproduction de référence associée au signal de son de référence modifié (274),
est minimal lorsqu'un signal de son de test (270) ou un signal de son de test modifié (272) et un signal de son de référence (274) ou un signal de son de référence modifié (276) associent à un segment de piste sonore de même longueur spatiale une même longueur dans le temps ou un même nombre de valeurs de balayage équidistantes dans le temps.

**3.** Dispositif selon l'une des revendications 1 ou 2, dans lequel le moyen (250) destiné à comparer est réalisé de manière à représenter le signal de son de test (270) par une succession de valeurs de balayage et à représenter le signal de son de référence par une succession de valeurs de balayage de référence, pour corréler la succession de valeurs de balayage de test avec la succession de valeurs de balayage de référence, le résultat de corrélation étant basé sur le fait que la succession de valeurs de balayage de test est chaque fois décalée par rapport à la succession de valeurs de balayage de référence d'au moins une valeur de balayage et que, pour chaque décalage, la valeur de corrélation correspondante est déterminée par addition de produits d'une multiplacation par paire de valeurs de balayage de la succession de valeurs de balayage de test et de valeurs de balayage de la succession de valeurs de balayage de référe ou de leurs quantités, de sorte que le résultat de la corrélation soit une succession de valeurs de corrélation, de sorte que le résultat de la corrélation pour la valeur de décalage dans le temps présente un maximum auquel la succession de valeurs de balayage de test coïncide au maximum avec la succession de valeurs de balayage de référence.

**4.** Dispositif selon l'une des revendications 1 à 3, dans lequel le moyen (250) destiné à comparer est réalisé de manière à comparer chacun d'une pluralité de signaux de son de référence avec le même signal de son de test (270), pour obtenir une pluralité de résultats de comparaison, la pluralité de signaux de son de référence (274, 276) se basant sur une pluralité de taux de balayage de référence différents entre eux, et un signal de son de référence (274, 276) parmi la pluralité de signaux de son de référence (274, 276) étant le signal de son de référence (274) ou un signal de son de référence modifié (276).

**5.** Dispositif selon la revendication 4, dans lequel la pluralité de résultats de comparaison est obtenue par corrélation et présente la caractéristique suivante:

un moyen (568) destiné à évaluer la qualité de la pluralité de résultats de comparaison, pour déterminer, sur base d'un ou d'une pluralité de critères, un signal de son de référence parmi la pluralité de signaux de son de référence (274, 276) le plus similaire au signal de son de test.

**6.** Dispositif selon la revendication 5, dans lequel le moyen (568) destiné à évaluer la qualité est réalisé de manière à déterminer, pour chaque résultat de corrélation, une distance de bruit de crête et à définir un signal de son de référence (274, 276) comme étant le signal de son de référence le plus similaire lorsqu'il présente, comparé aux autres signaux de son de référence (274, 276), la distance de bruit de crête la plus grande.

**7.** Dispositif selon l'une des revendications 5 ou 6, dans lequel le moyen (250) destiné à comparer est réalisé de manière à comparer un premier signal de son de référence basé sur un premier taux de balayage de référence avec le signal de son de test, pour obtenir un premier résultat de corrélation, à comparer un deuxième signal de son de référence basé sur un deuxième taux de balayage de référence avec le signal de son de test, pour obtenir un deuxième résultat de corrélation, et à comparer un troisième signal de son de référence basé sur un troisième taux de balayage de référence avec le signal de son de test, pour obtenir un troisième résultat de corrélation, le deuxième taux de balayage de référence étant supérieur au premier taux de balayage de référence et le troisième taux de balayage de référence étant supérieur au deuxième taux de balayage de référence, et

dans lequel le moyen (568) destiné à évaluer la qualité détermine, sur base des résultats de corrélation, un signal de son de référence le plus similaire, et présente par ailleurs un moyen (230) destiné à faire varier qui est réalisé de manière à ne pas modifier, pour une corrélation suivante, le premier, le deuxième et le troisième taux de balayage de référence lorsque le deuxième signal de test de référence est le signal de test de référence le plus similaire, à augmenter le premier, le deuxième et le troisième taux de balayage lorsque le troisième signal de son de référence est le signal de son de référence le plus similaire, et à réduire le premier, le deuxième et le troisième taux de balayage de référence lorsque le premier signal de son de référence est le signal de son de référence le plus similaire.

**8.** Dispositif selon l'une des revendications 4 à 7, dans lequel le moyen (250) destiné à comparer est réalisé de manière à comparer la pluralité de signaux de son de référence (274, 276) en parallèle avec le signal de son de test (270).

**9.** Dispositif selon l'une des revendications 4 à 7, dans lequel le moyen (250) destiné à comparer est réalisé de manière à comparer la pluralité de signaux de son de référence (274, 276) successivement avec le signal de son de test (270).

**10.** Dispositif selon l'une des revendications 1 à 9, dans lequel le moyen (210) destiné à déterminer est réalisé de manière à déterminer, sur base du résultat (278) de la corrélation, la mesure de la vitesse de reproduction du signal de son de test.

**11.** Procédé pour réaliser une corrélation entre un signal de son de test (270) qui peut être reproduit avec une vitesse de reproduction variable et un signal de son de référence (274) qui est une version mémorisée numériquement du signal de son de test (270), aux étapes suivantes consistant à:

déterminer une mesure de la vitesse de reproduction du signal de son de test (270);
faire varier un taux de balayage de test auquel est balayé le signal de son de test (270), pour générer un signal de son de test modifié (272) en fonction de la mesure de la vitesse de reproduction, ou faire varier un taux de balayage de référence du signal de son de référence mémorisé numériquement (274), pour créer un signal de son de référence modifié (276) en fonction de la mesure de la vitesse de reproduction de test, le taux de balayage de test ou le taux de balayage de référence étant variés de sorte qu'un écart entre une vitesse de reproduction de test associée au signal de son de test (270) et une vitesse de reproduction de référence associée au signal de son de référence modifié (276) soit réduit, ou qu'un écart entre une vitesse de reproduction de test associée au signal de son de test modifié (272) et une vitesse de reproduction de référence associée au signal de son de référence (274) soit réduit, ou qu'un écart entre une vitesse de reproduction de test associée au signal de son de test modifié (274) et une vitesse de reproduction de référence associée à un signal de son de référence modifié (276) soit réduit, une variation d'un taux de balayage émulant une adaptation d'une vitesse de reproduction; und

comparer le signal de son de test modifié (272) et le signal de son de référence (274), ou le signal de son de test (270) et le signal de son de référence modifié (276), ou le signal de son de test modifié (272) et le signal de son de référence modifié (276), le signal de son de test (270) étant représenté par une succession de valeurs de balayage et le signal de son de référence étant représenté par une succession de valeurs de balayage de référence, pour obtenir un résultat (278) de la corrélation.

**12.** Programme d'ordinateur avec un code de programme pour réaliser un procédé selon la revendication 11 lorsque le programme d'ordinateur est exécuté sur un ordinateur.

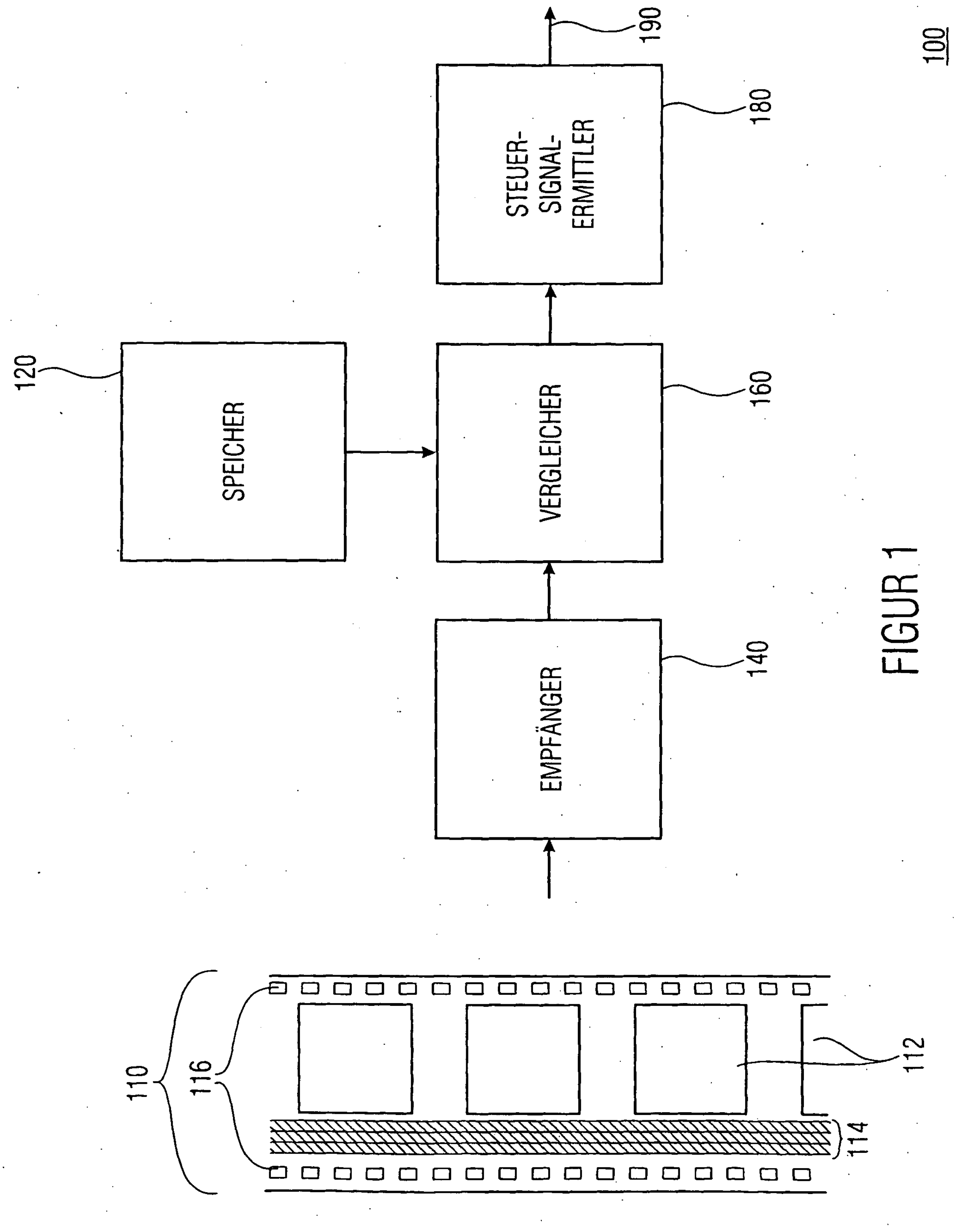
100
SPEICHER
120
EMPFÄNGER
140
VERGLEICHER
160
STEUER-
SIGNAL-
ERMITTLER
180
190
110
112
114
116

FIGUR 1

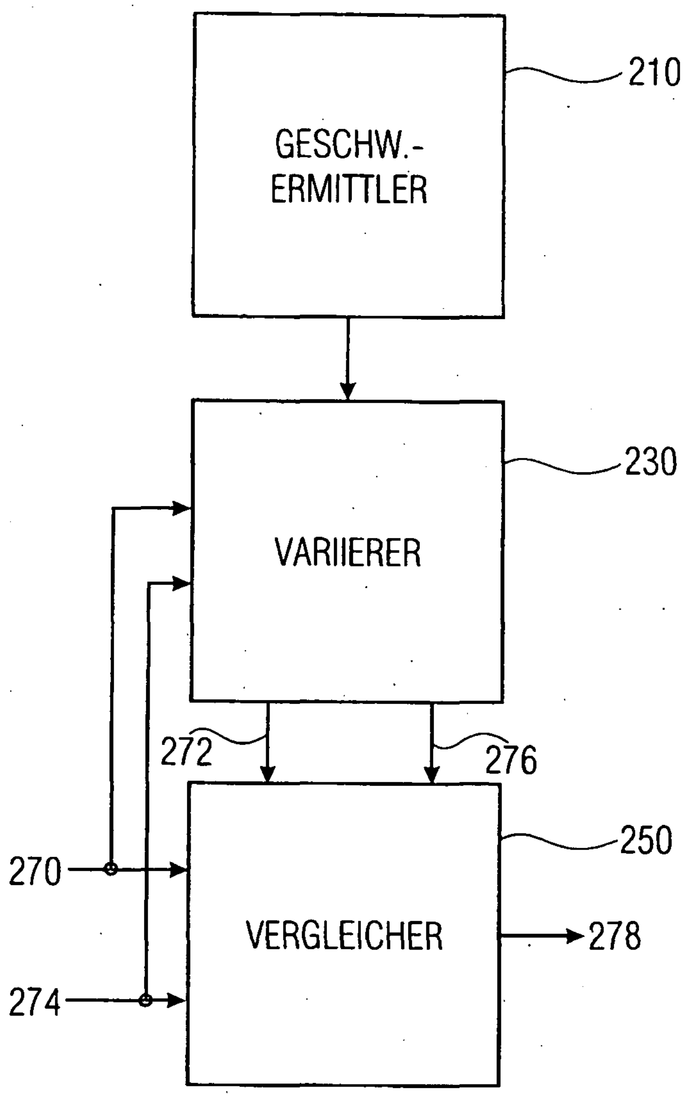
GESCHW.-
ERMITTLER
210
VARIIERER
230
272
276
250
270
VERGLEICHER
278
274

FIGUR 2A

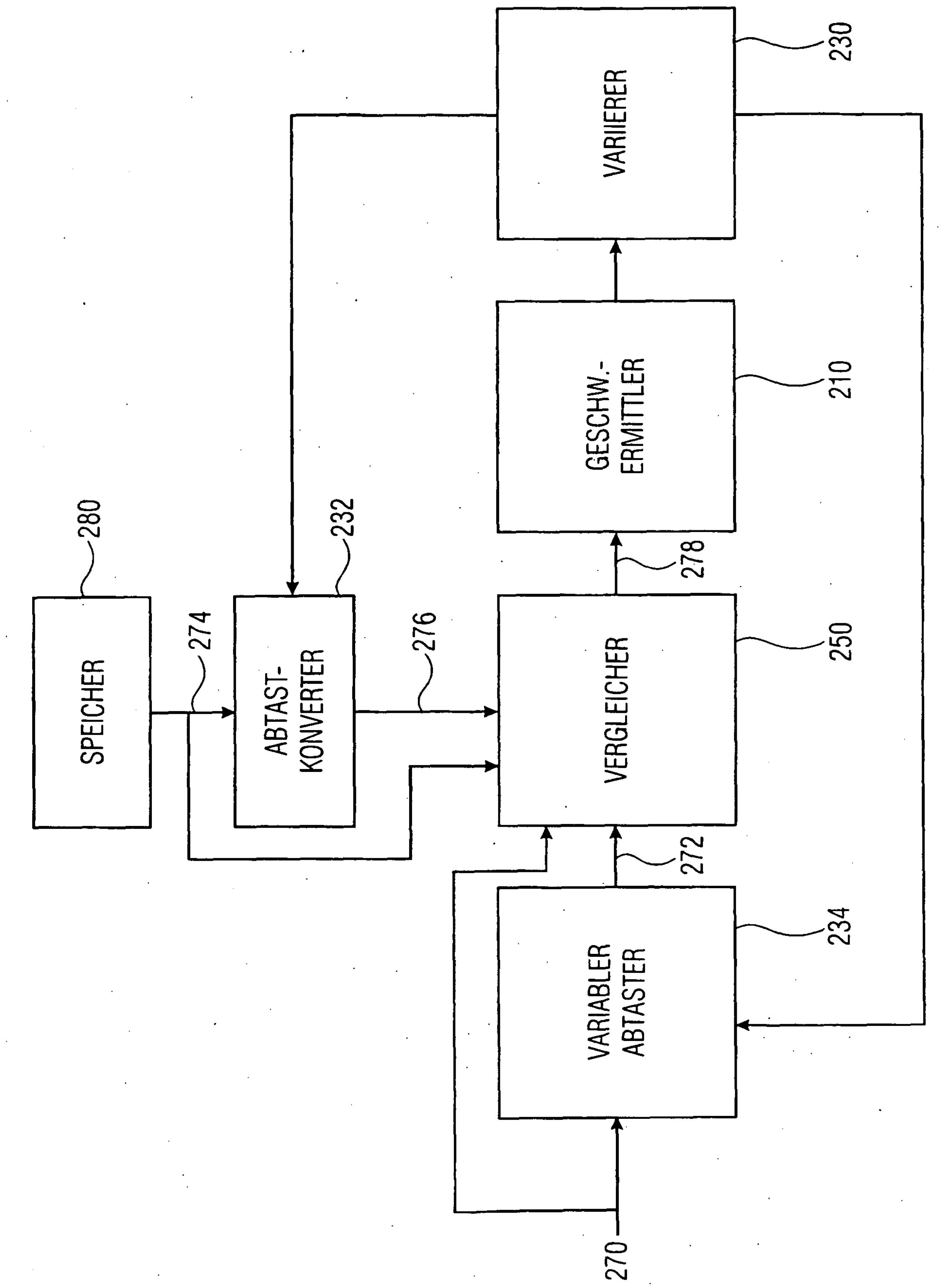
SPEICHER
280
274
ABTAST-
KONVERTER
232
276
VERGLEICHER
250
278
272
GESCHW.-
ERMITTLER
210
VARIIERER
230
VARIABLER
ABTASTER
234
270

FIGUR 2B

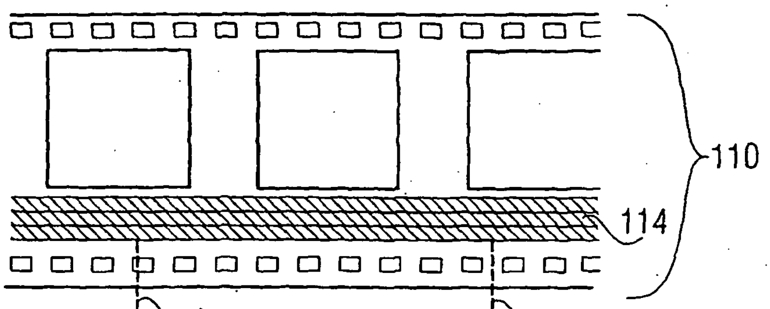


FIGUR 2C.1

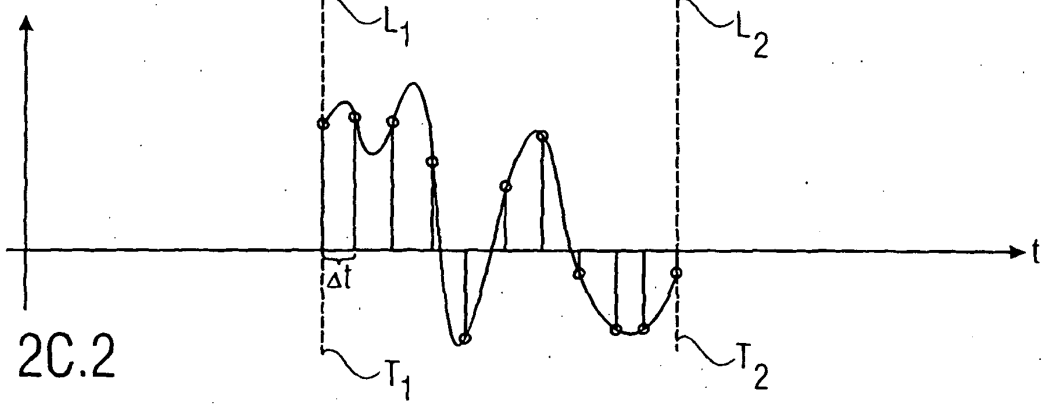


FIGUR 2C.2

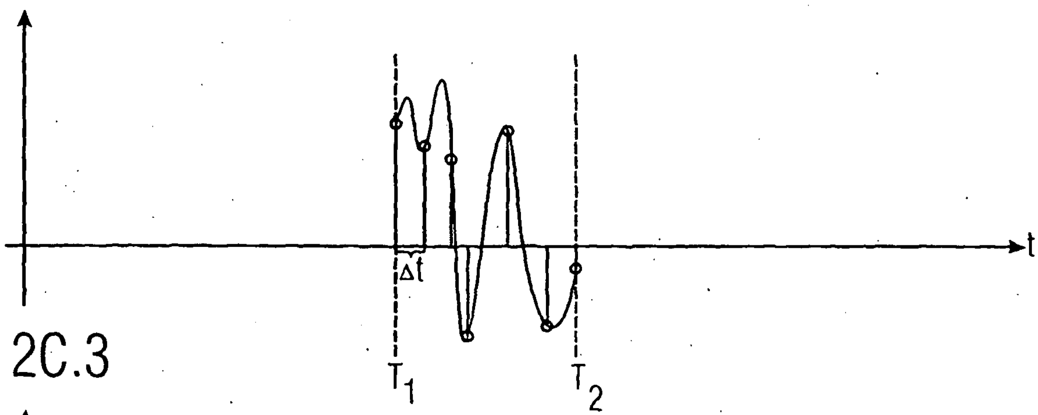


FIGUR 2C.3

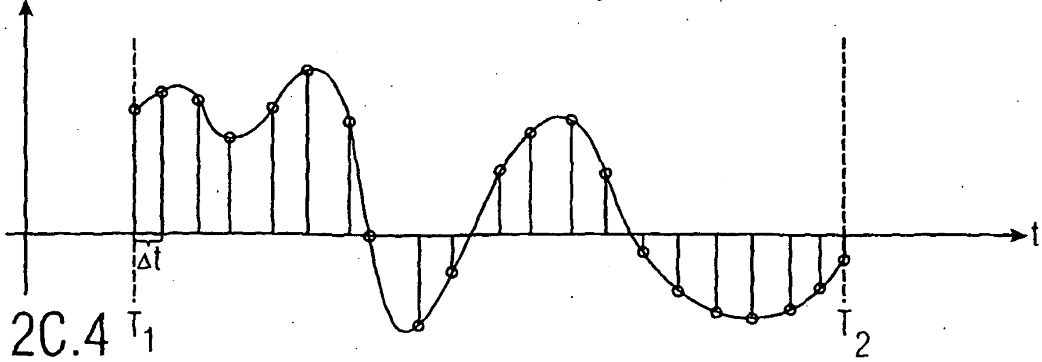


FIGUR 2C.4

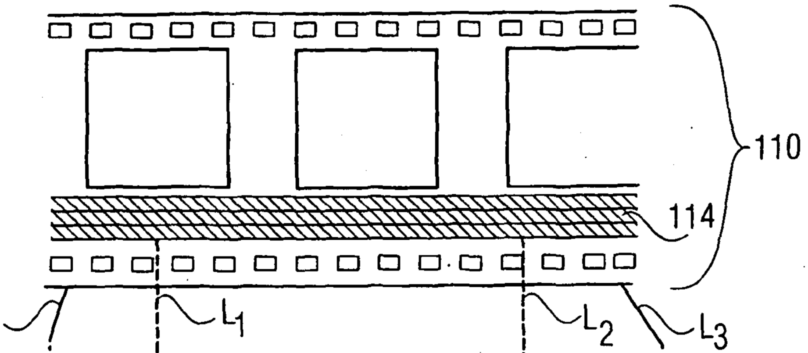


FIGUR 2D.1

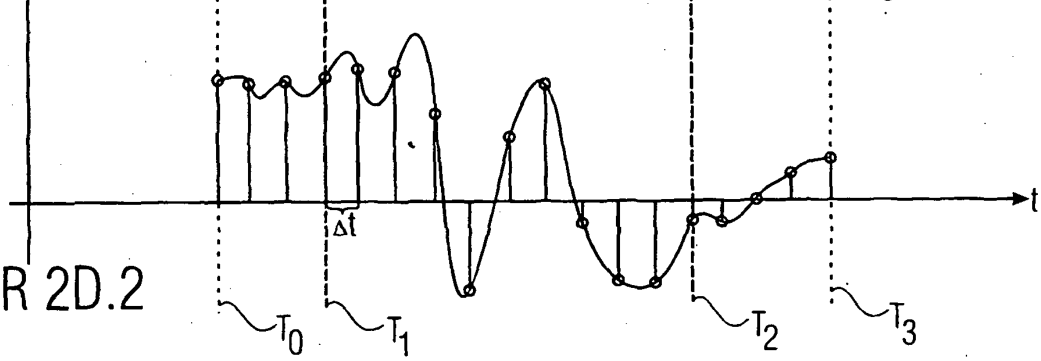


FIGUR 2D.2

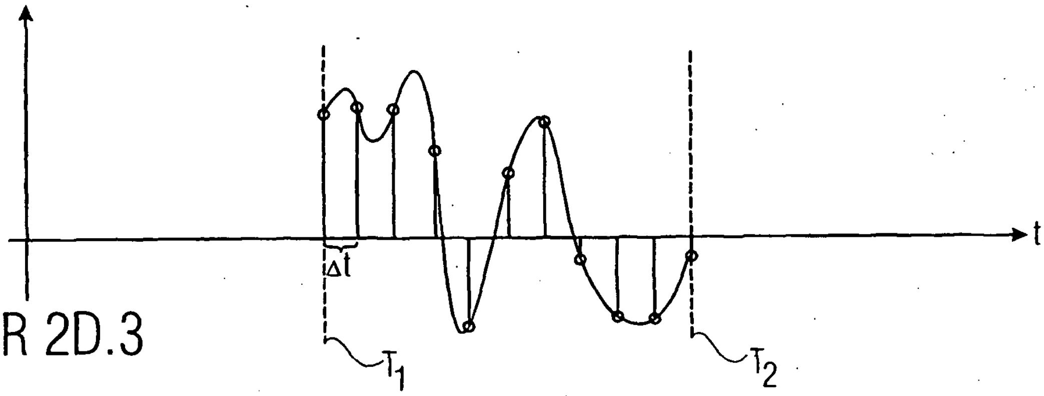


FIGUR 2D.3

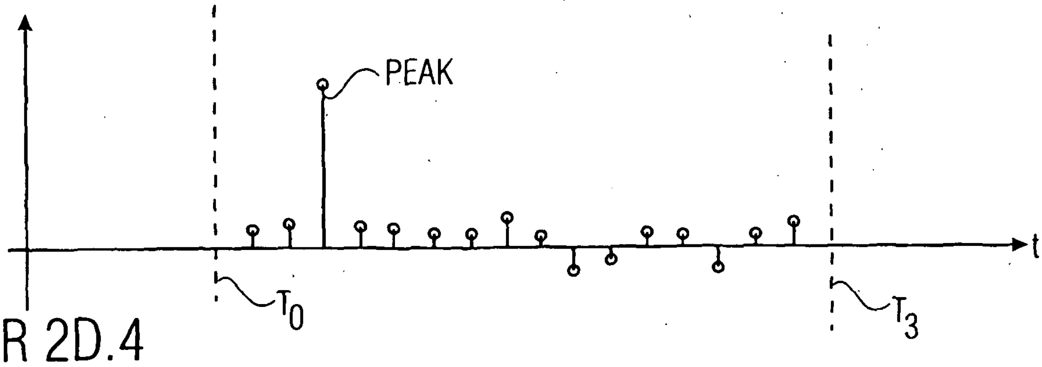


FIGUR 2D.4

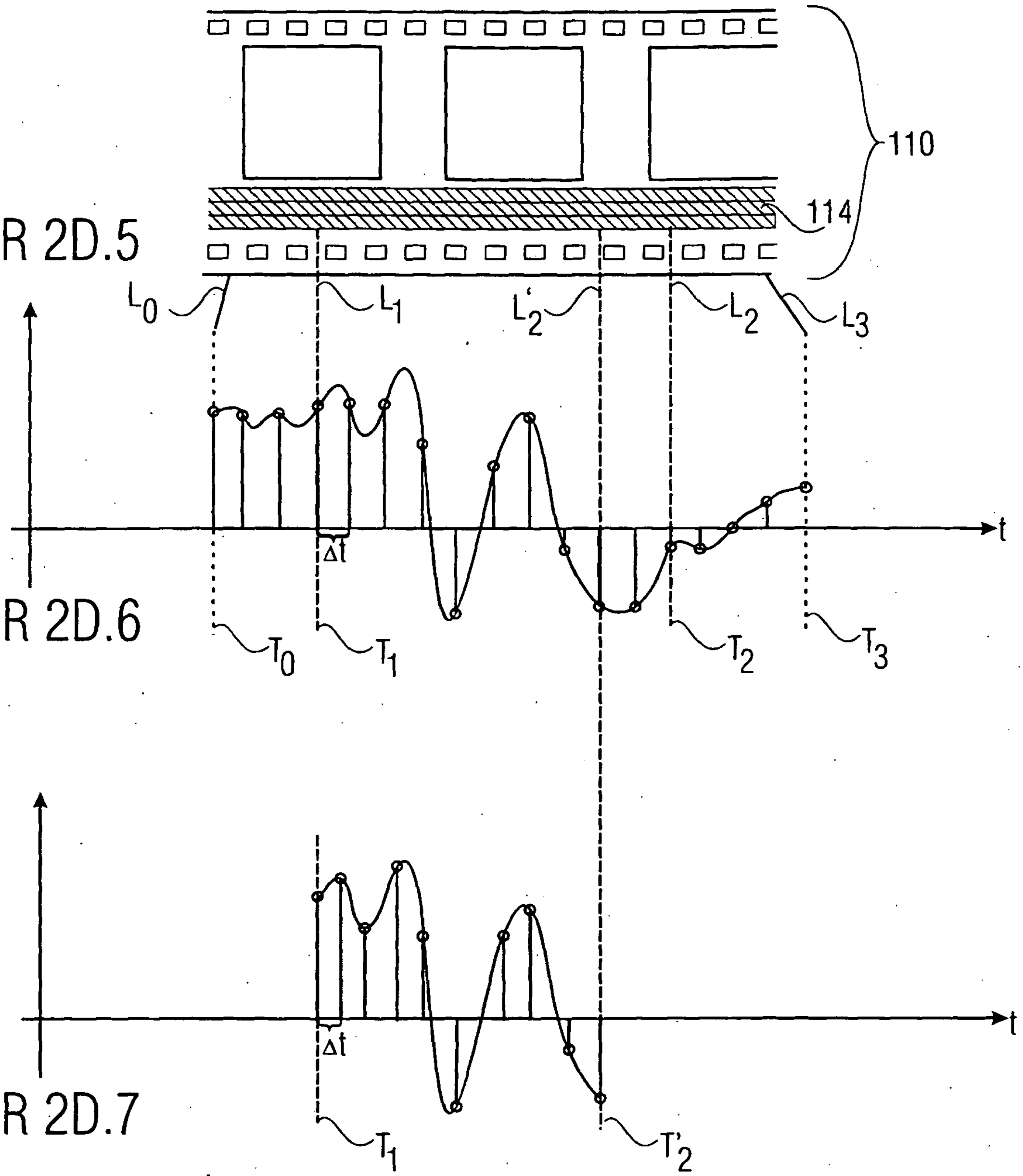


FIGUR 2D.5

FIGUR 2D.6

FIGUR 2D.7

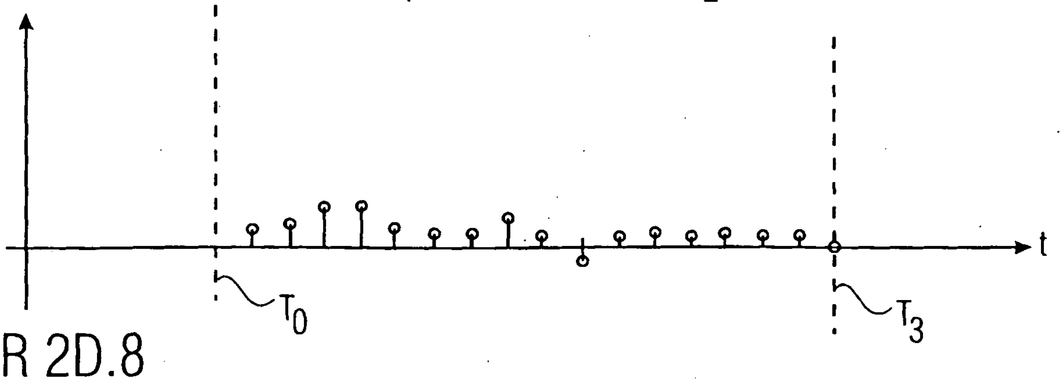


FIGUR 2D.8

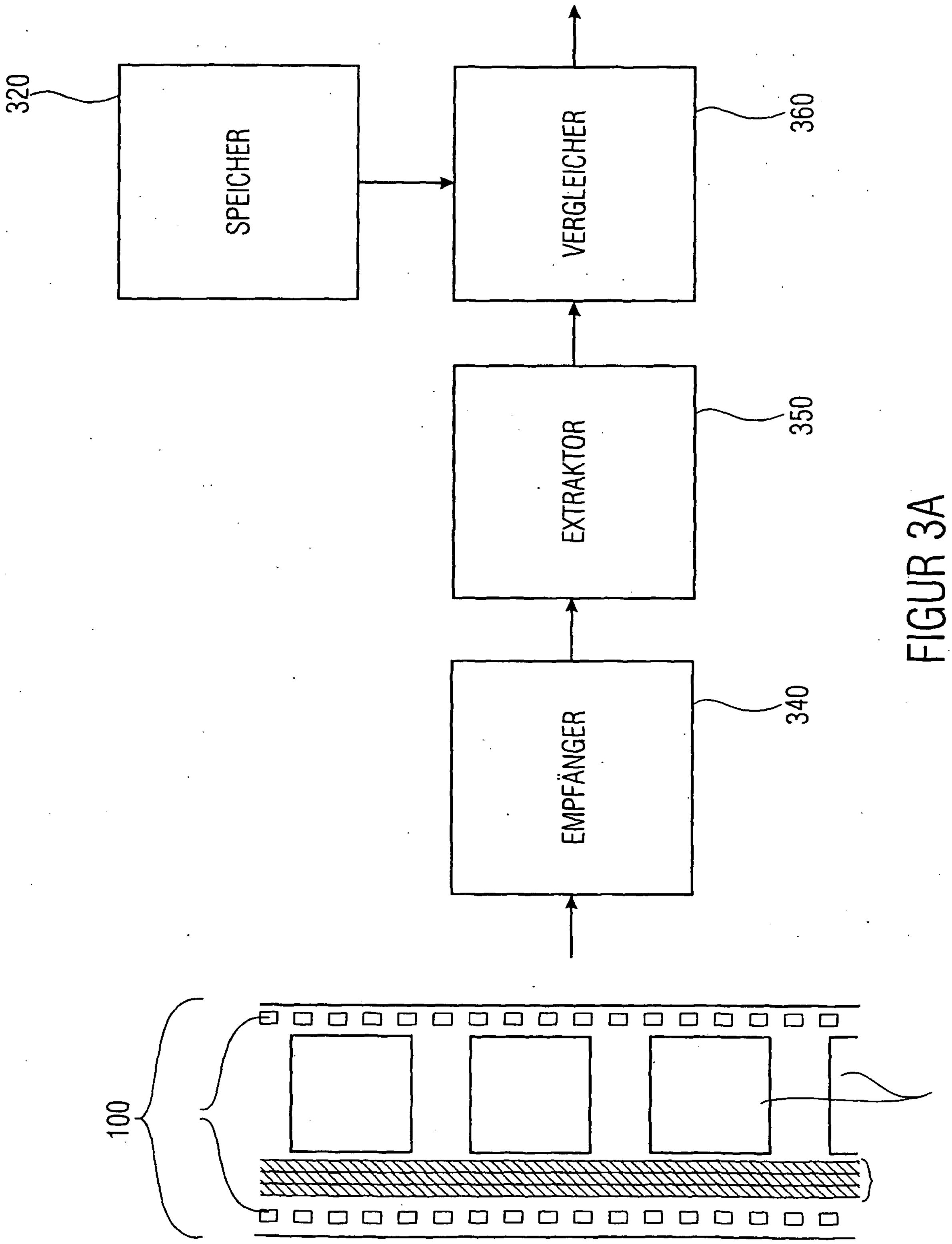
320
SPEICHER
VERGLEICHER
360
EXTRAKTOR
350
EMPFÄNGER
340
100

FIGUR 3A

FIGUR 3B.1

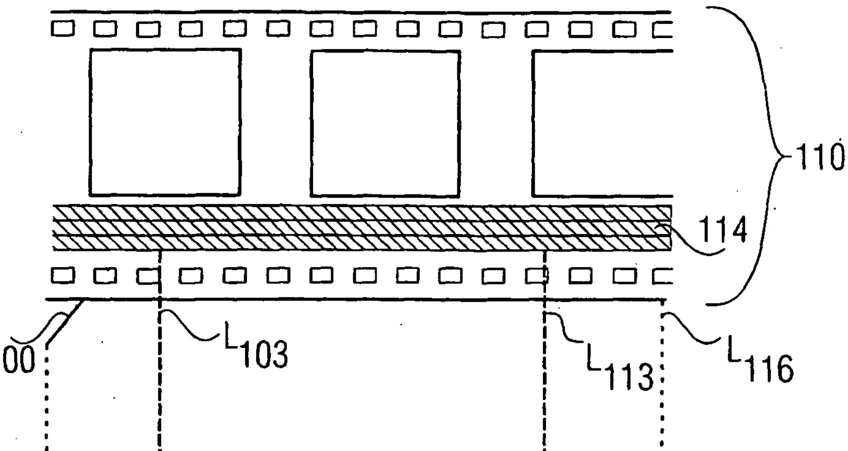


FIGUR 3B.2

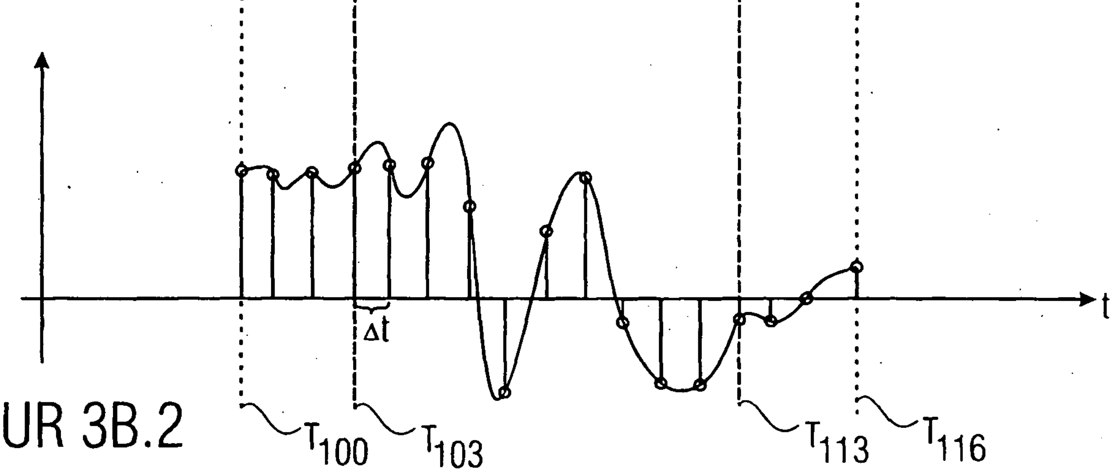

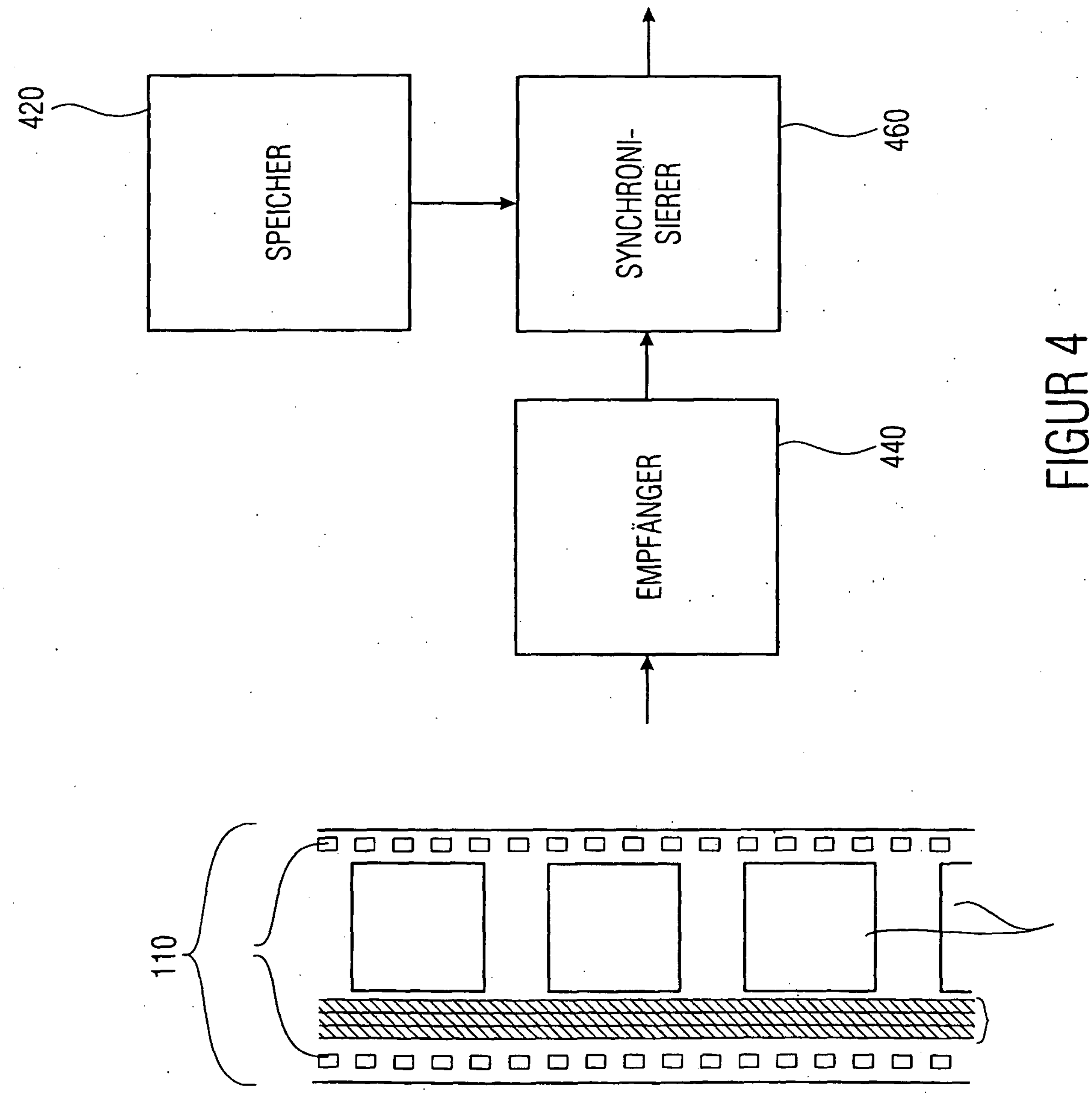


FIGUR 4

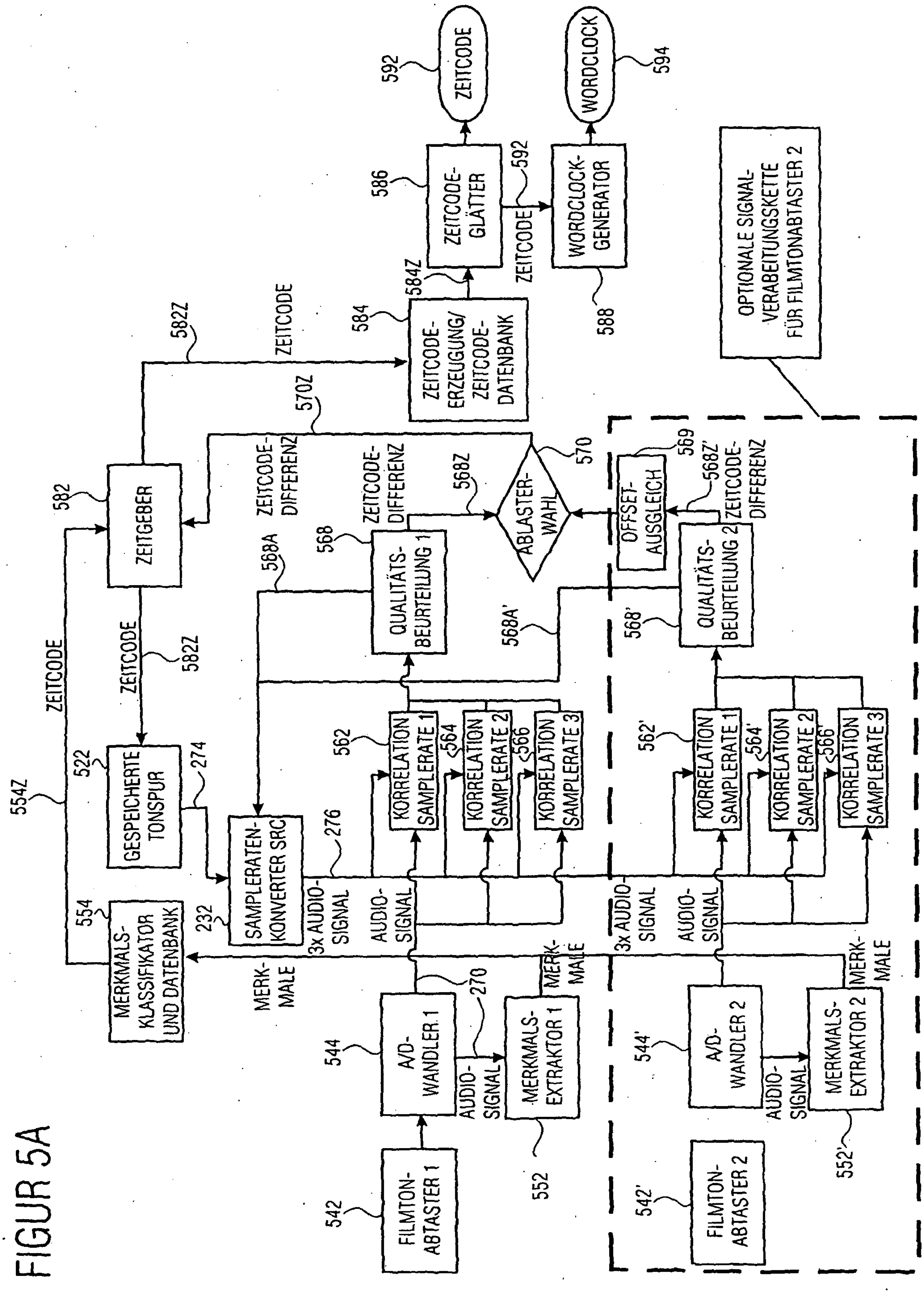
FILMTON-ABTASTER 1
A/D-WANDLER 1
MERKMALS-EXTRAKTOR 1
AUDIO-SIGNAL
MERK-MALE
MERKMALS-KLASSIFIKATOR UND DATENBANK
SAMPLERATEN-KONVERTER SRC
3x AUDIO-SIGNAL
GESPEICHERTE TONSPUR
ZEITCODE
ZEITGEBER
KORRELATION SAMPLERATE 1
KORRELATION SAMPLERATE 2
KORRELATION SAMPLERATE 3
QUALITÄTS-BEURTEILUNG 1
ZEITCODE-DIFFERENZ
ABLASTER-WAHL
ZEITCODE-ERZEUGUNG/ ZEITCODE-DATENBANK
ZEITCODE-GLÄTTER
WORDCLOCK-GENERATOR
WORDCLOCK
OFFSET-AUSGLEICH
QUALITÄTS-BEURTEILUNG 2
A/D-WANDLER 2
MERKMALS-EXTRAKTOR 2
FILMTON-ABTASTER 2
OPTIONALE SIGNAL-VERABEITUNGSKETTE FÜR FILMTONABTASTER 2
542
544
552
554
554Z
522
274
232
276
270
562
564
566
568
568A
568A'
568Z
570
570Z
582
582Z
584
584Z
586
588
592
594
542'
544'
552'
562'
564'
566'
568'
568Z'
569

FIGUR 5A

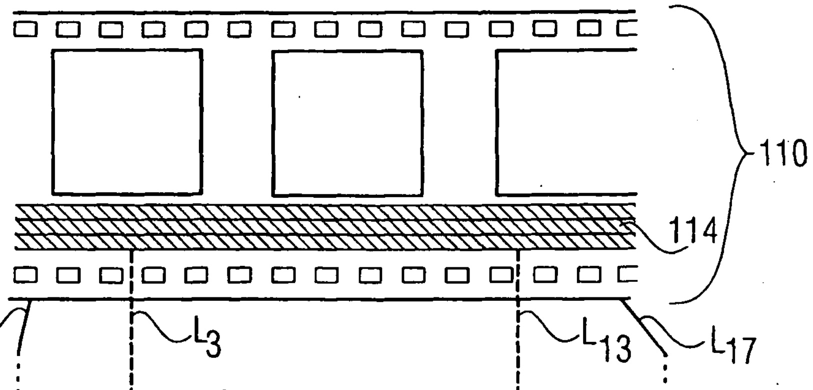


FIGUR 5B.1

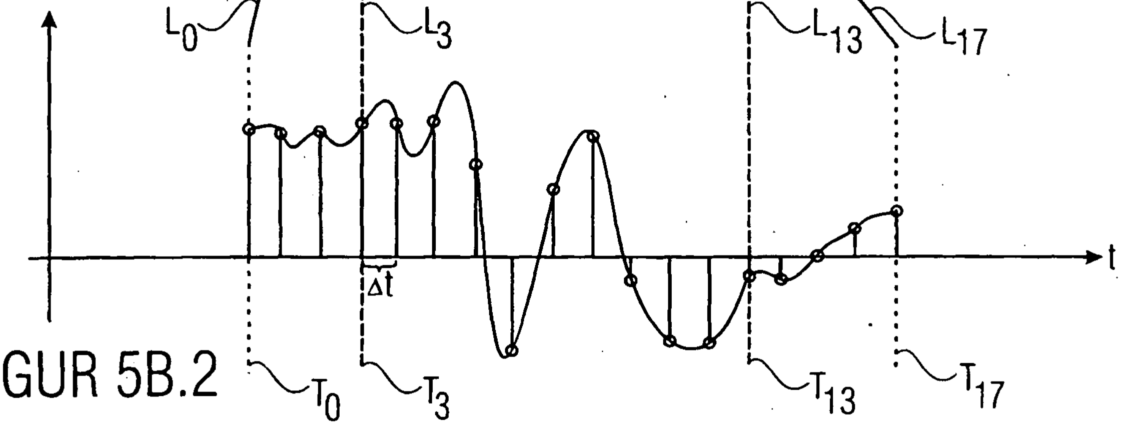


FIGUR 5B.2

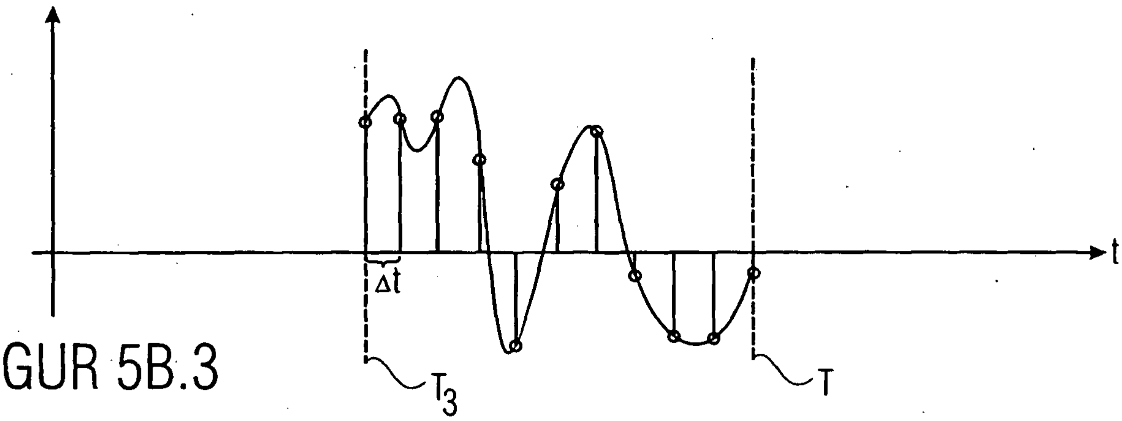


FIGUR 5B.3

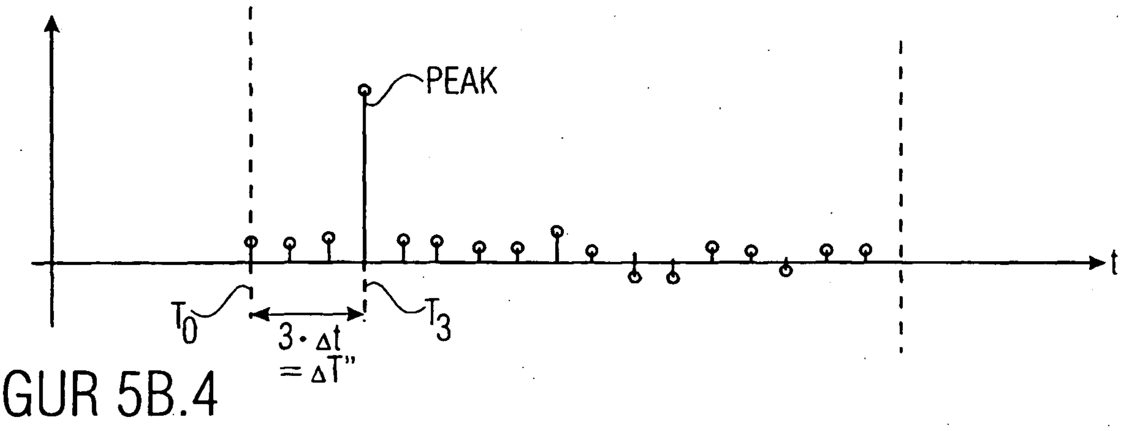


FIGUR 5B.4

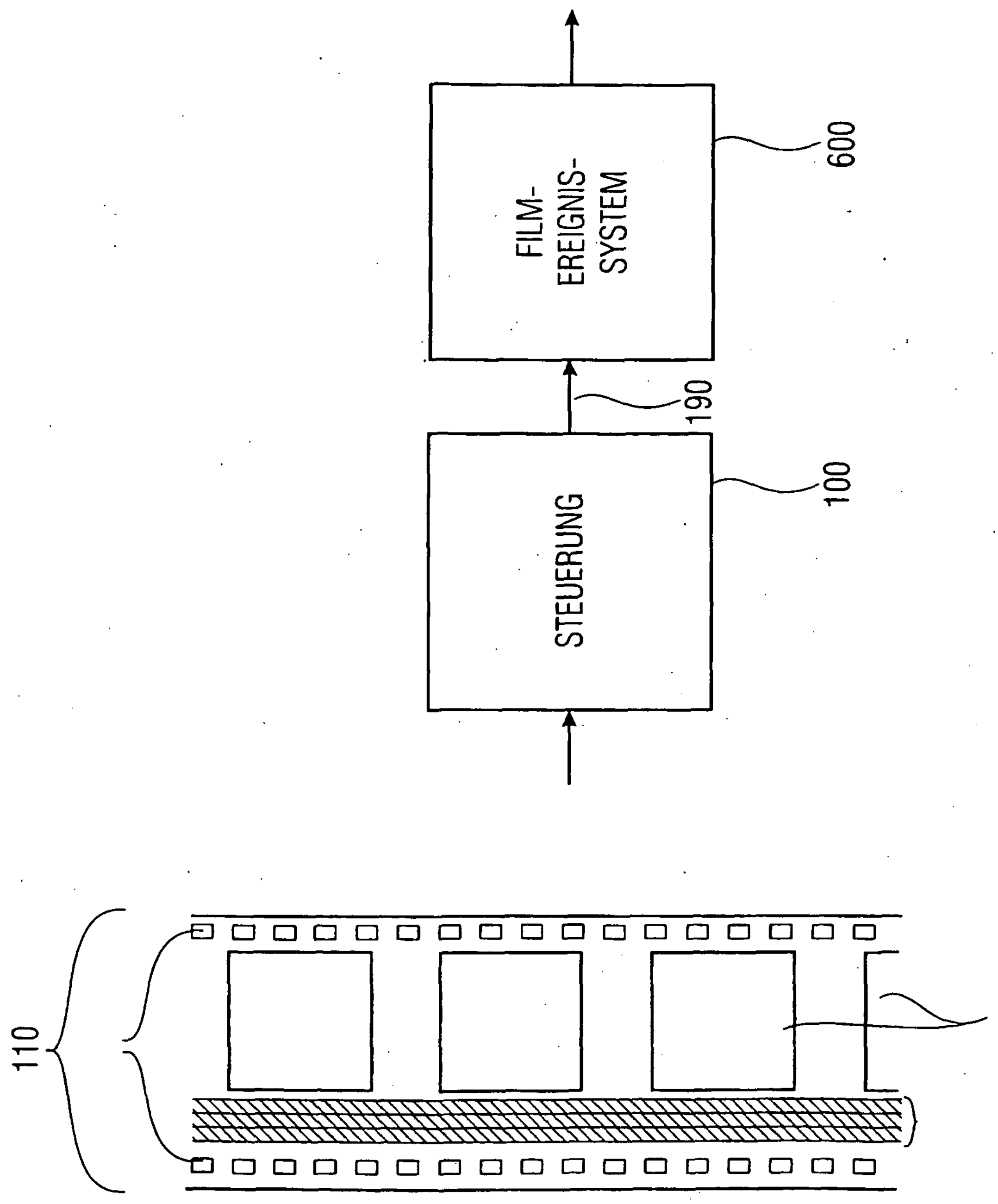


FIGUR 6A

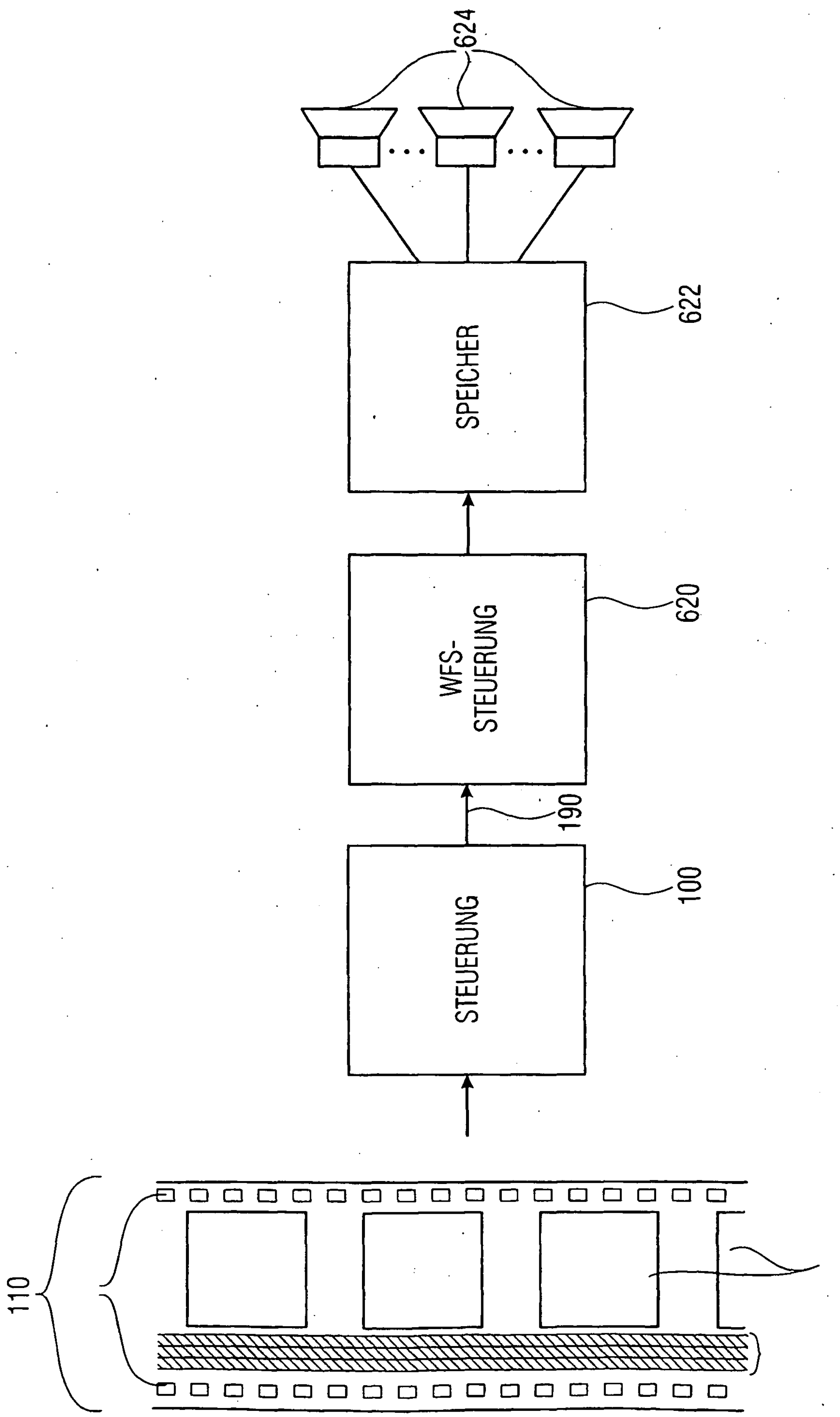


FIGUR 6B

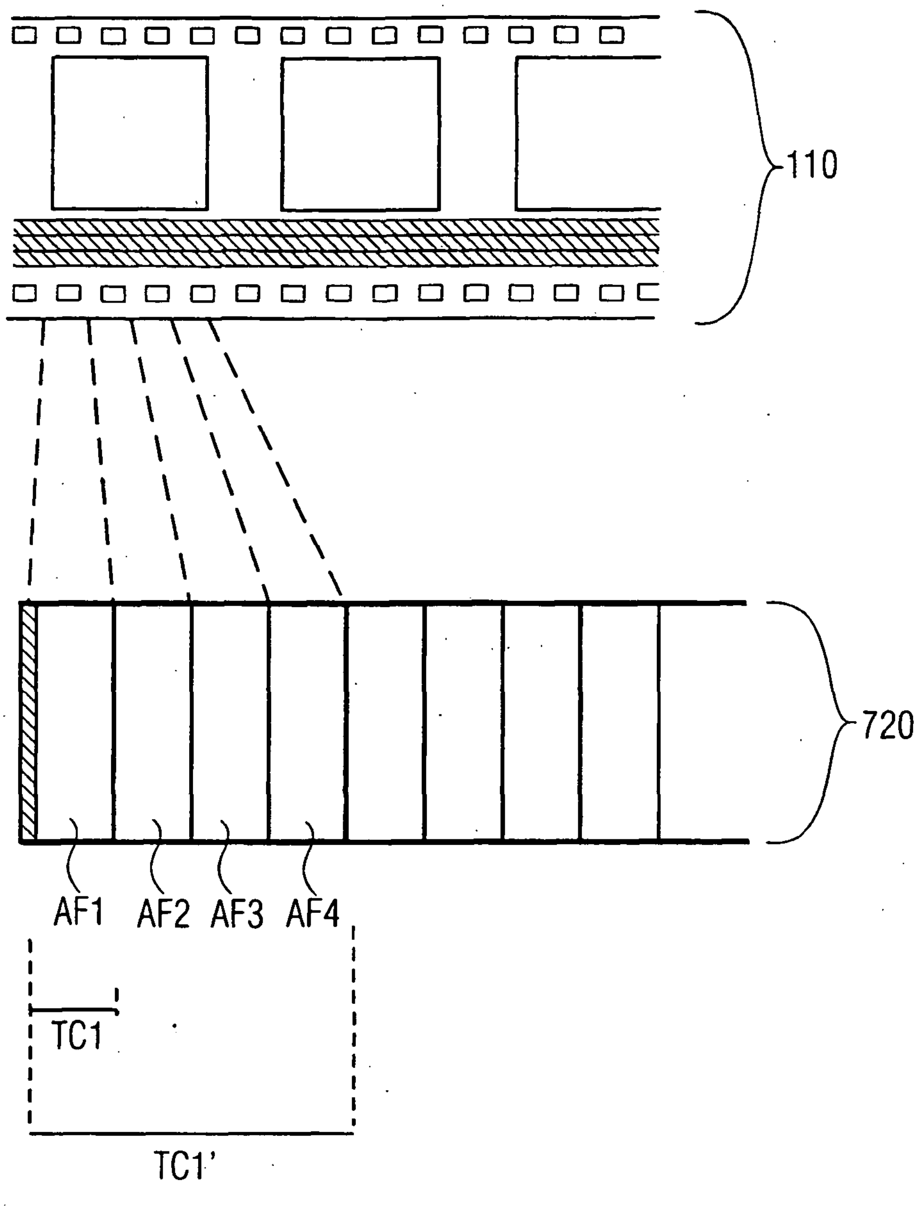


FIGUR 7

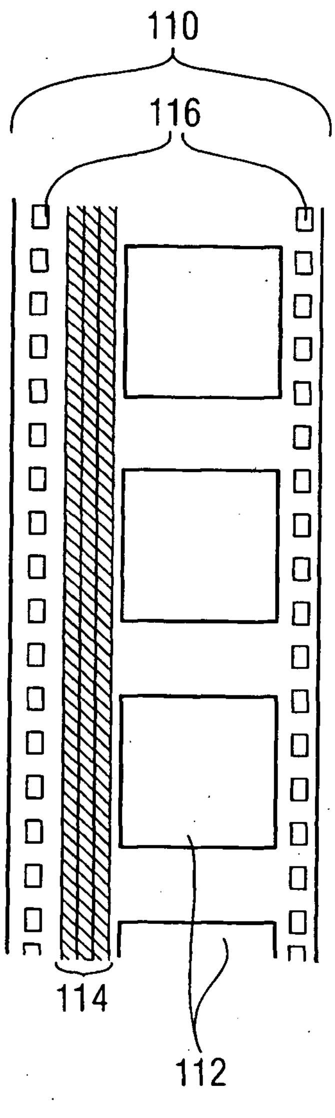


FIGUR 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5040081 A
- US 5087980 A
- JP 02029963 A


### In der Beschreibung aufgeführte Nicht-Patentliteratur


- Generating Timecode Information from Analog Sources. *Convention, Audio Engineering Society,* 28. Mai 2005, vol. 118, 6473